# EUROPEAN PATENT APPLICATION

(11) **EP 4 815 602 A1**
(43) Date of publication of application: **30.09.2026**
(21) Application number: 24902949.7
(22) Date of filing: 13.12.2024
(51) Int. Cl.: H04W 72/50

(54) **INFORMATION TRANSMISSION METHOD AND APPARATUS**

(30) Priority: 15.12.2023 CN 202311736294
(71) Applicant: Huawei Technologies Co., Ltd., Shenzhen, Guangdong 518129 (CN)
(72) Inventor: LI, Meng, Shenzhen, Guangdong 518129 (CN); YING, Jiangwei, Shenzhen, Guangdong 518129 (CN); ZHU, Fangyuan, Shenzhen, Guangdong 518129 (CN); YANG, Yanmei, Shenzhen, Guangdong 518129 (CN)
(74) Representative: Gill Jennings & Every LLP
(86) International application number: PCT/CN2024/139093
(87) International publication number: WO 2025/124532

(57) **Abstract**

An information transmission method and an apparatus are provided. In the information transmission method, an SF network element determines, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service; and the SF network element sends second information to a sensing device, where the second information is used to adjust the transmission resource allocated to the sensing service. This manner helps meet the requirement for the sensing service, thereby improving sensing performance.

## Description

This application claims priority to Chinese Patent Application No. 202311736294.X, filed with the China National Intellectual Property Administration on December 15, 2023 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and an apparatus.

### BACKGROUND

With popularization of communication technologies, communication devices are gradually extended from hotspot areas to all areas. In addition, development of the communication technologies also provides conditions for addressing new scenarios and new requirements. Sensing is a technology that can be further enabled after the communication technologies develop to a specific stage. The sensing technology is to collect signals obtained after sensing signals are reflected by objects, and further process the collected signals, to sense the objects, environments, and the like. The sensing technology and the communication technology may be used in combination, that is, communication and sensing are integrated. In an integrated communication and sensing scenario, the communication device may send a sensing signal, to perform sensing based on the sensing signal.

An application function (application function, AF) network element may initiate, to a network, a request for establishing a sensing service, so that the network can control a sensing device to perform sensing. The AF network element may further have specific requirements for the sensing service. How to meet the requirements for the sensing service is a technical problem that needs to be resolved.

### SUMMARY

Embodiments of this application provide an information transmission method and an apparatus, to help meet a requirement for a sensing service, thereby improving sensing performance.

According to a first aspect, this application provides an information transmission method. The method may be applied to a sensing function (sensing function, SF) network element, or may be applied to a chip in the SF network element, or may be applied to a logical module or software that can implement all or a part of functions of the SF network element. The following uses the SF network element as an example for description. The method includes: The SF network element determines, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service. The SF network element sends second information to a sensing device, where the second information is used to adjust the transmission resource allocated to the sensing service.

It can be learned that, in this manner, after the sensing data is obtained, that the transmission resource allocated to the sensing service needs to be adjusted can be determined based on the requirement for the sensing service and the first information determined based on the sensing data, and the second information is sent to the sensing device. This helps the sensing device adjust the transmission resource allocated to the sensing service. In this way, the sensing device performs sensing based on an adjusted transmission resource, to help meet the requirement for the sensing service, thereby improving sensing performance.

In an optional implementation, the method further includes: The SF network element receives the first information from an AF network element.

In an optional implementation, the second information includes one or more of the following: the performance parameter that does not meet the requirement, or a gap between the performance parameter that does not meet the requirement and the requirement.

In an optional implementation, the second information is specifically used to request to adjust the transmission resource allocated to the sensing service. Alternatively, the second information is specifically used to request to adjust, for a first performance parameter, the transmission resource allocated to the sensing service, where the first performance parameter is a performance parameter that does not meet the requirement.

In an optional implementation, the second information is specifically used to increase the transmission resource allocated to the sensing service.

In an optional implementation, the sensing device is a terminal device. The method further includes: The SF network element sends the second information to an access network device corresponding to the terminal device.

In an optional implementation, the method further includes: The SF network element receives third information from the sensing device, where the third information indicates whether the transmission resource allocated to the sensing service is successfully adjusted.

In an optional implementation, the method further includes: The SF network element sends, to the AF network element, sensing data obtained by using the adjusted transmission resource. The SF network element receives fourth information or fifth information from the AF network element, where the fourth information indicates that the requirement for the sensing service is met, and the fifth information is used to request to reduce the transmission resource allocated to the sensing service. The SF network element sends sixth information to the sensing device, where the sixth information is used to request to reduce the transmission resource allocated to the sensing service.

In an optional implementation, the method further includes: The SF network element determines, based on sensing data obtained by using the adjusted transmission resource, that the requirement for the sensing service is met. The SF network element sends sixth information to the sensing device, where the sixth information is used to request to reduce the transmission resource allocated to the sensing service.

According to a second aspect, this application provides an information transmission method. The method may be applied to an AF network element, or may be applied to a chip in the AF network element, or may be applied to a logical module or software that can implement all or a part of functions of the AF network element. The following uses the AF network element as an example for description. The method includes: The AF network element determines, based on first information and a requirement for a sensing service, that a transmission resource allocated to the sensing service needs to be adjusted. The first information includes one or more of the following: error event information, an error event proportion, or a performance parameter that does not meet the requirement, and the first information is determined based on sensing data corresponding to the sensing service. The AF network element sends seventh information to an SF network element, where the seventh information is used to request to adjust the transmission resource allocated to the sensing service.

It can be learned that, in this manner, after the sensing data is obtained, that the transmission resource allocated to the sensing service needs to be adjusted can be determined based on the requirement for the sensing service and the first information determined based on the sensing data, and the seventh information is sent to the SF network element. This helps adjust the transmission resource allocated to the sensing service. In this way, sensing is performed based on an adjusted transmission resource, to help meet the requirement for the sensing service, thereby improving sensing performance.

In an optional implementation, the seventh information is specifically used to request to adjust, for a first performance parameter, the transmission resource allocated to the sensing service, where the first performance parameter is a performance parameter that does not meet the requirement.

In an optional implementation, the seventh information includes one or more of the following: the performance parameter that does not meet the requirement, or a gap between the performance parameter that does not meet the requirement and the requirement.

In an optional implementation, the seventh information is specifically used to request to increase the transmission resource allocated to the sensing service.

In an optional implementation, the method further includes: The AF network element receives, from the SF network element, sensing data obtained by using the adjusted transmission resource. The AF network element determines, based on the sensing data obtained by using the adjusted transmission resource, that the requirement for the sensing service is met. The AF network element sends fourth information or fifth information to the SF network element, where the fourth information indicates that the requirement for the sensing service is met, and the fifth information is used to request to reduce the transmission resource allocated to the sensing service.

According to a third aspect, this application provides an information transmission method. The method may be applied to an SF network element, or may be applied to a chip in the SF network element, or may be applied to a logical module or software that can implement all or a part of functions of the SF network element. The following uses the SF network element as an example for description. The method includes: When a sensing scenario corresponding to a sensing service changes, the SF network element determines, based on network statistics information, that a transmission resource allocated to the sensing service needs to be adjusted, where the network statistics information includes N sensing scenarios and transmission resources respectively corresponding to the N sensing scenarios, and N is an integer greater than 1. The SF network element sends ninth information to a sensing device, where the ninth information is used to request to adjust the transmission resource allocated to the sensing service.

It can be learned that, in this manner, when the sensing scenario corresponding to the sensing service changes, that the transmission resource allocated to the sensing service needs to be adjusted can be determined based on the network statistics information, and the ninth information is sent to the sensing device. This helps adjust the transmission resource allocated to the sensing service. Accordingly, this helps an adjusted transmission resource match a changed sensing scenario, to help meet a requirement for the sensing service, thereby improving sensing performance.

According to a fourth aspect, this application provides an information transmission method. The method may be applied to an AF network element, or may be applied to a chip in the AF network element, or may be applied to a logical module or software that can implement all or a part of functions of the AF network element. The following uses the AF network element as an example for description. The method includes: When a sensing scenario corresponding to a sensing service changes, the AF network element determines, based on network statistics information, that a transmission resource allocated to the sensing service needs to be adjusted, where the network statistics information includes N sensing scenarios and transmission resources respectively corresponding to the N sensing scenarios, and N is an integer greater than 1. The AF network element sends tenth information to an SF network element, where the tenth information is used to request to adjust the transmission resource allocated to the sensing service.

It can be learned that, in this manner, when the sensing scenario corresponding to the sensing service changes, that the transmission resource allocated to the sensing service needs to be adjusted can be determined based on the network statistics information, and the tenth information is sent to the SF network element. This helps adjust the transmission resource allocated to the sensing service. Accordingly, this helps an adjusted transmission resource match a changed sensing scenario, to help meet a requirement for the sensing service, thereby improving sensing performance.

According to a fifth aspect, this application further provides a communication apparatus. The communication apparatus may be an SF network element, or may be a chip in the SF network element, or may be a logical module or software that can implement all or a part of functions of the SF network element. The communication apparatus has a function of implementing a part or all of the implementations of the first aspect or the third aspect. Alternatively, the communication apparatus may be an AF network element, or may be a chip in the AF network element, or may be a logical module or software that can implement all or a part of functions of the AF network element. The communication apparatus has a function of implementing a part or all of the implementations of the second aspect or the fourth aspect. The function may be implemented by hardware, or may be implemented by hardware executing corresponding software. The hardware or the software includes one or more units or modules corresponding to the function.

In a possible design, a structure of the communication apparatus may include a processing unit. The processing unit is configured to support the communication apparatus in performing a corresponding function in the foregoing methods. Optionally, the communication apparatus further includes a communication unit. The communication unit is configured to support communication between the communication apparatus and another communication apparatus. Optionally, the communication apparatus may further include a storage unit. The storage unit is configured to be coupled to the processing unit and the communication unit. The storage unit stores program instructions and data that are necessary for the communication apparatus. In addition, the processing unit may be configured to control the communication unit to perform data/signaling receiving and sending.

In an implementation, the processing unit is configured to determine, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service.

The communication unit is configured to send second information to a sensing device, where the second information is used to adjust the transmission resource allocated to the sensing service.

In addition, for another optional implementation of the communication apparatus in this aspect, refer to related content in the first aspect. Details are not described herein again.

In another implementation, the processing unit is configured to determine, based on first information and a requirement for a sensing service, that a transmission resource allocated to the sensing service needs to be adjusted. The first information includes one or more of the following: error event information, an error event proportion, or a performance parameter that does not meet the requirement, and the first information is determined based on sensing data corresponding to the sensing service.

The communication unit is configured to send seventh information to an SF network element, where the seventh information is used to request to adjust the transmission resource allocated to the sensing service.

In addition, for another optional implementation of the communication apparatus in this aspect, refer to related content in the second aspect. Details are not described herein again.

In another implementation, the processing unit is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1.

The communication unit is configured to send ninth information to a sensing device, where the ninth information is used to request to adjust the transmission resource allocated to the sensing service.

In addition, for another optional implementation of the communication apparatus in this aspect, refer to related content in the third aspect. Details are not described herein again.

In another implementation, the processing unit is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1.

The communication unit is configured to send tenth information to an SF network element, where the tenth information is used to request to adjust the transmission resource allocated to the sensing service.

In addition, for another optional implementation of the communication apparatus in this aspect, refer to related content in the fourth aspect. Details are not described herein again.

In an example, the communication unit may be a transceiver or a communication interface, the storage unit may be a memory, and the processing unit may be a processor. The processor is coupled to the memory. The memory is configured to store a program or instructions of the processor. The processor may be configured to enable, when the program or the instructions are executed by the processor, the communication apparatus to perform the method according to the first aspect. The transceiver or the communication interface may be configured to: receive and send signals and/or data.

In an implementation, the processor is configured to determine, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service.

The transceiver is configured to send second information to a sensing device, where the second information is used to adjust the transmission resource allocated to the sensing service.

In addition, for another optional implementation of the communication apparatus in this aspect, refer to related content in the first aspect. Details are not described herein again.

In another implementation, the processor is configured to determine, based on first information and a requirement for a sensing service, that a transmission resource allocated to the sensing service needs to be adjusted. The first information includes one or more of the following: error event information, an error event proportion, or a performance parameter that does not meet the requirement, and the first information is determined based on sensing data corresponding to the sensing service.

The transceiver is configured to send seventh information to an SF network element, where the seventh information is used to request to adjust the transmission resource allocated to the sensing service.

In addition, for another optional implementation of the communication apparatus in this aspect, refer to related content in the second aspect. Details are not described herein again.

In another implementation, the processor is configured to: when a sensing scenario corresponding to a sensing service changes, determine that a transmission resource allocated to the sensing service needs to be adjusted, where network statistics information includes N sensing scenarios and transmission resources respectively corresponding to the N sensing scenarios, and N is an integer greater than 1.

The transceiver is configured to send ninth information to a sensing device, where the ninth information is used to request to adjust the transmission resource allocated to the sensing service.

In addition, for another optional implementation of the communication apparatus in this aspect, refer to related content in the third aspect. Details are not described herein again.

In another implementation, the processor is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1.

The transceiver is configured to send tenth information to an SF network element, where the tenth information is used to request to adjust the transmission resource allocated to the sensing service.

In addition, for another optional implementation of the communication apparatus in this aspect, refer to related content in the fourth aspect. Details are not described herein again.

In another implementation, the communication apparatus is a chip or a chip system. The processing unit may alternatively be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing devices may be respectively disposed on chips that are independent of each other, or at least a part or all of the devices may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of integrated circuit technologies, more devices may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the devices are independently disposed on different chips or integrated and disposed on one or more chips usually depends on a requirement of a product design. An implementation form of the foregoing devices is not limited in embodiments of this application.

According to a sixth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of inputting the foregoing information by the processor. When outputting the foregoing information, the processor outputs the foregoing information to the transceiver, so that the transceiver (or the communication interface) transmits the foregoing information. After the foregoing information is outputted by the processor, other processing may further need to be performed on the foregoing information before the foregoing information arrives at the transceiver (or the communication interface). Similarly, when the processor receives the foregoing input information, the transceiver (or the communication interface) receives the foregoing information, and inputs the foregoing information to the processor. Further, after the transceiver (or the communication interface) receives the foregoing information, other processing may need to be performed on the foregoing information before the foregoing information is input to the processor.

Unless otherwise specified, or if operations such as sending and receiving related to the processor do not contradict actual functions or internal logic of the operations in related descriptions, all the operations may be more generally understood as operations such as output, receiving, and input of the processor, instead of a sending and receiving operation directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be respectively disposed on different chips. A type of the memory and a manner of disposing the memory and the processor are not limited in embodiments of this application.

According to a seventh aspect, this application further provides a communication system. The system includes an apparatus configured to perform the method according to any one of the first aspect to the fourth aspect. In a possible design, the system may further include another device that interacts with the apparatus configured to perform the method according to any one of the first aspect to the fourth aspect in solutions provided in this application.

According to an eighth aspect, this application provides a computer-readable storage medium. The computer-readable storage medium stores a computer program. When the computer program is run, the method according to any one of the first aspect to the fourth aspect is performed.

According to a ninth aspect, this application further provides a computer program product including instructions. The computer program product includes computer program code. When the computer program code is run, the method according to any one of the first aspect to the fourth aspect is performed.

According to a tenth aspect, this application provides a chip system. The chip system includes a processor and an interface. The interface is configured to obtain a program or instructions. The processor is configured to invoke the program or the instructions to implement a function in any one of the first aspect to the fourth aspect. In a possible design, the chip system further includes a memory. The memory is configured to store program instructions and data that are necessary for a terminal. The chip system may include a chip, or may include a chip and another discrete device.

### BRIEF DESCRIPTION OF DRAWINGS

FIG. 1 is a diagram of a network architecture based on a service-oriented interface;
FIG. 2 is a diagram of a network architecture based on a point-to-point interface;
FIG. 3 is a diagram of a communication system according to an embodiment of this application;
FIG. 4 is a diagram of establishing a sensing service according to an embodiment of this application;
FIG. 5 is another diagram of establishing a sensing service according to an embodiment of this application;
FIG. 6 is a schematic flowchart of an information transmission method 100 according to an embodiment of this application;
FIG. 7 is a schematic flowchart of an information transmission method 200 according to an embodiment of this application;
FIG. 8 is a schematic flowchart of an information transmission method 300 according to an embodiment of this application;
FIG. 9 is a schematic flowchart of another information transmission method 300 according to an embodiment of this application;
FIG. 10A and FIG. 10B are diagrams of another information transmission method according to an embodiment of this application;
FIG. 11A and FIG. 11B are diagrams of another information transmission method according to an embodiment of this application;
FIG. 12A and FIG. 12B are diagrams of another information transmission method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes embodiments of this application with reference to accompanying drawings in embodiments of this application.

Before embodiments of this application are described, the following several descriptions are first provided.

First, in this application, unless otherwise specified or there is a logic conflict, terms and/or descriptions between different embodiments are consistent and may be mutually referenced, and technical features in different embodiments may be combined based on an internal logical relationship thereof, to form a new embodiment.

It may be understood that some optional features in embodiments of this application may be independent of another feature in some scenarios, or may be combined with the another feature in some scenarios. This is not limited.

It may be understood that solutions in embodiments of this application may be used in combination, and explanations or descriptions of terms and similar operations or steps in embodiments may be mutually referenced or explained in embodiments. This is not limited in this application.

Second, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c, where a, b, and c each may be singular or plural.

Third, in this application, "first", "second", and various numbers indicate differentiation for ease of description, but are not intended to limit the scope of embodiments of this application, for example, are intended to differentiate different messages, but are not intended to describe a specific order or sequence. It should be understood that objects described in such a way are interchangeable in an appropriate circumstance, so that a solution other than embodiments of this application can be described.

Fourth, in this application, the terms "include" and "have" and any variants thereof are intended to cover a non-exclusive inclusion. For example, a process, method, system, product, or device that includes a series of steps or units is not necessarily limited to those steps or units that are clearly listed, but may include another step or unit that is not clearly listed or is inherent to the process, method, product, or device.

Fifth, in this application, "indicate" may include "directly indicate" and "indirectly indicate". When a piece of indication information is described as indicating A, the indication information may directly indicate A or indirectly indicate A, but it does not indicate that the indication information definitely carries A.

Sixth, in this application, "sending information to an XX (a device/network element)" may be understood as that a destination of the information is the device, and may include directly or indirectly sending the information to the device. "Receiving information from an XX (a device/network element) or receiving the information that is from the XX (the device/network element)" may be understood as that a source of the information is the device, and may include directly or indirectly receiving the information from the device. The information may undergo necessary processing, for example, a format change, between the source that sends the information and the destination. However, the destination may understand valid information from the source.

A network architecture and a service scenario described in embodiments of this application are intended to describe technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

The technical solutions in embodiments of this application may be applied to various communication systems, for example, a global system for mobile communications, a long term evolution (long term evolution, LTE) system, a universal mobile telecommunications system, a 4th generation (4th generation, 4G) mobile communication system, a 4.5th generation (4.5th generation, 4.5G) mobile communication system, and a 5th generation (5th generation, 5G) mobile communication system. In addition, with continuous development of communication technologies, the technical solutions in embodiments of this application may be further applied to a subsequent evolved communication system, for example, a 6th generation (6th generation, 6G) mobile communication system or a 7th generation (7th generation, 7G) mobile communication system.

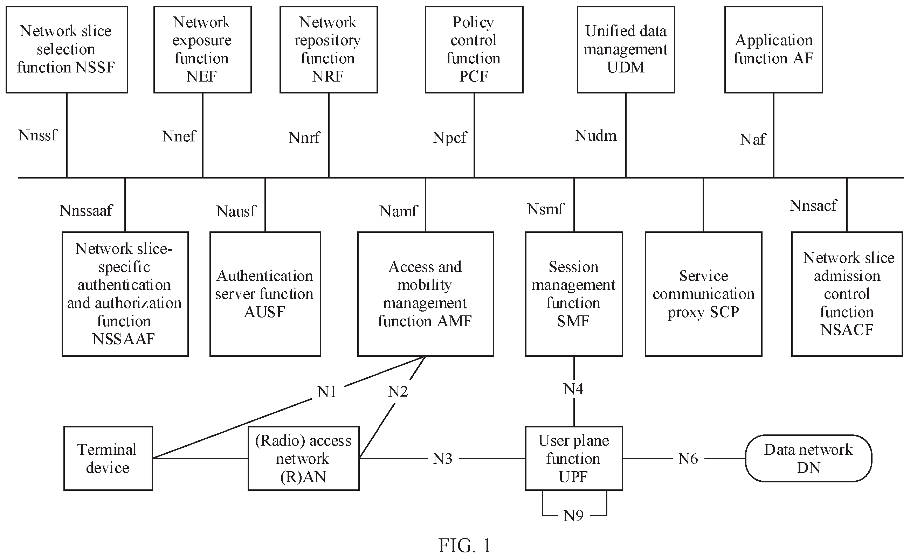

FIG. 1 is a diagram of a network architecture based on a service-oriented interface. The 5G network architecture shown in FIG. 1 includes a terminal device, a data network (data network, DN), and an operator network (the operator network may also be referred to as a network for short). The operator network includes a (radio) access network ((radio) access network, (R)AN) and a core network (core network, CN). The (R)AN is configured to connect the terminal device to a wireless network. The core network is configured to: manage the terminal device and provide a gateway for communicating with the DN. The core network includes one or more of the following network elements: a network slice selection function (network slice selection function, NSSF) network element, a network slice-specific authentication and authorization function (network slice-specific authentication and authorization function, NSSAAF) network element, an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a user plane function (user plane function, UPF) network element, a service communication proxy (service communication proxy, SCP) network element, a network slice admission control function (network slice admission control function, NSACF) network element, and the like.

Specifically, in FIG. 1, a service-based interface provided by the NSSF network element is Nnssf; a service-based interface provided by the NEF network element is Nnef; a service-based interface provided by the NRF network element is Nnrf; a service-based interface provided by the PCF network element is Npcf; a service-based interface provided by the UDM network element is Nudm; a service-based interface provided by the AF network element is Naf; a service-based interface provided by the NSSAAF network element is Nnssaaf; a service-based interface provided by the AUSF network element is Nausf; a service-based interface provided by the AMF network element is Namf; a service-based interface provided by the SMF network element is Nsmf; a service-based interface provided by the NSACF network element is Nnsacf; the terminal device communicates with the AMF network element through an N1 interface; the RAN communicates with the AMF network element through an N2 interface; the RAN communicates with the UPF network element through an N3 interface; the UPF network element communicates with the SMF network element through an N4 interface; two UPF network elements communicate with each other through an N9 interface; and the UPF network element communicates with the DN through an N6 interface.

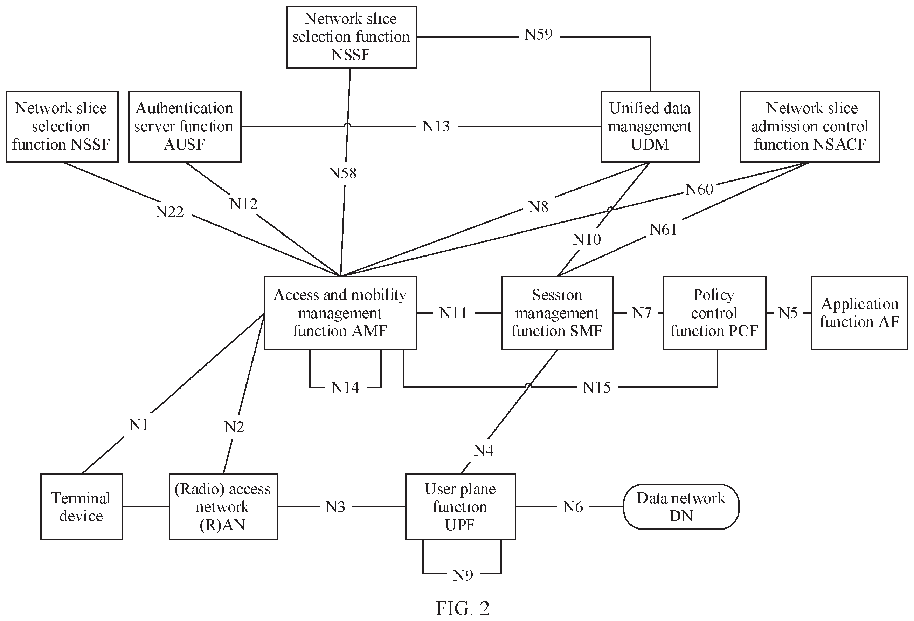

FIG. 2 is a diagram of a network architecture based on a point-to-point interface. A difference between the 5G network architecture shown in FIG. 2 and the 5G network architecture shown in FIG. 1 lies in that an interface between network elements in FIG. 2 is a point-to-point interface, instead of a service-based interface. Specifically, in FIG. 2, an AMF network element communicates with a terminal device through an N1 interface; the AMF network element communicates with a RAN through an N2 interface; different AMF network elements communicate with each other through an N14 interface; the AMF network element communicates with an SMF network element through an N11 interface; the AMF network element communicates with a PCF network element through an N15 interface; the AMF network element communicates with an NSSF network element through an N22 interface; the AMF network element communicates with an AUSF network element through an N12 interface; the AMF network element communicates with an NSSAAF network element through an N58 interface; the AMF network element communicates with a UDM network element through an N8 interface; the AMF network element communicates with an NSACF network element through an N60 interface; a UPF network element communicates with the RAN through an N3 interface; the UPF network element communicates with the SMF network element through an N4 interface; the UPF network element communicates with a DN through an N6 interface; two UPF network elements communicate with each other through an N9 interface; the SMF network element communicates with the UDM network element through an N10 interface; the SMF network element communicates with the NSACF network element through an N61 interface; the SMF network element communicates with the PCF network element through an N7 interface; the PCF network element communicates with an AF network element through an N5 interface; the UDM network element communicates with the AUSF network element through an N13 interface; and the UDM network element communicates with the NSSAAF network element through an N59 interface.

In embodiments of this application, the terminal device may also be referred to as user equipment (user equipment, UE), a terminal, an access terminal, a subscriber unit, a subscriber station, a mobile station, a remote station, a remote terminal, a mobile device, a user terminal, a user agent, or a user apparatus, and may be used in a 4G system, a 5G system, a 6G system, and the like. The terminal device in embodiments of this application may be a joint device that transmits and receives digital signals on an ordinary telephone line, or may be a cellular phone, a cordless phone, a session initiation protocol (session initiation protocol, SIP) phone, a wireless local loop (wireless local loop, WLL) station, a personal digital assistant (personal digital assistant, PDA), a mobile phone (mobile phone), a tablet computer (pad), a computer with a wireless transceiver function, a head-mounted display (head-mounted display, HMD), a virtual reality (virtual reality, VR) terminal device (for example, VR glasses), an augmented reality (augmented reality, AR) terminal device (for example, AR glasses), a mixed reality (mixed reality, MR) terminal device, a wireless terminal in industrial control (industrial control), a processing device connected to a wireless modem, a tactile terminal device, a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a road side unit (road side unit, RSU) of the foregoing wireless terminal type, a wearable terminal device, or the like.

An access network device in the (R)AN includes but is not limited to a base station (base station, BS), a radio network controller (radio network controller, RNC), a base station controller (base station controller, BSC), a network device transceiver station (base transceiver station, BTS), a home network device (for example, a home evolved NodeB, or a home NodeB, HNB), a baseband unit (baseband unit, BBU), a wireless relay node, a wireless backhaul node, and a transmission and reception point (transmission and reception point, TRP, or a transmission point, TP). The base station is an apparatus that can provide a wireless communication function and that is deployed in a radio access network. The base station may also be referred to as a base station device, for example, an evolved NodeB (evolutional NodeB, eNB or e-NodeB) in an LTE system, a NodeB (NodeB), a base station (gNodeB or gNB) in the 5G system, or a base station in the 6G system. The base station may include a BBU and a remote radio unit (remote radio unit, RRU). The BBU and the RRU may be placed at different places. For example, the RRU is remotely placed in a heavy-traffic area, and the BBU is placed in a central equipment room. The BBU and the RRU may alternatively be placed in a same equipment room. The BBU and the RRU may alternatively be different components of one rack. The base station may be in the following forms: a macro base station, a micro base station (also referred to as a small cell), a pico base station, a relay station, an access point, a balloon station, and the like. Optionally, in some deployments of the access network device, the access network device may include a central unit (central unit, CU), a distributed unit (distributed unit, DU), and the like. In some other deployments of the access network device, the CU may be further split into a CU-control plane (control plane, CP), a CU-user plane (user plane, UP), and the like. In some other deployments of the access network device, the access network device may alternatively be an open radio access network (open radio access network, ORAN) architecture or the like. A specific deployment manner of the access network device is not limited in this application.

The AMF network element is responsible for mobility management of the terminal device, including mobility status management, allocation of a temporary identity of the terminal device, and authentication and authorization of the terminal device.

The SMF network element is responsible for user plane network element selection, user plane network element reselection, and internet protocol (internet protocol, IP) address allocation, is further responsible for bearer establishment, modification, and release, and is responsible for quality of service (quality of service, QoS) control. In the 5G system, an interface used for communication between the SMF network element and the UPF network element is the N4 interface. A specific function of the N4 interface includes: configuring data forwarding details (for example, a forwarding rule and a QoS guarantee rule) of a PDU session, reporting an event, exchanging network element-level configuration information, and the like.

The UDM network element is responsible for managing subscription data, and is responsible for notifying a corresponding network element when the subscription data is modified.

The UDR network element is configured to: store and retrieve the subscription data, policy data, common architecture data, and the like, and is further used by the UDM network element, the PCF network element, and the NEF network element to obtain related data. The UDR network element needs to provide different data access authentication mechanisms for different types of data such as the subscription data and the policy data, to ensure data access security. For an unauthorized service-oriented operation or a data access request, the UDR network element needs to return a failure response carrying an appropriate cause value.

The AF network element is configured to provide an application layer service for the terminal device. When providing a service for the terminal device, the AF network element has a requirement on a QoS policy (policy) and a charging (charging) policy, and needs to notify a network of the requirement. In addition, the AF network element also needs application-related information fed back by the core network.

The UPF network element supports all or a part of the following functions: interconnection between the PDU session and the data network, packet routing and forwarding, and data packet detection. The UPF network element supports packet routing and forwarding. For example, the UPF network element supports applying an uplink classifier (uplink classifier, UL CL) to traffic and then forwarding the traffic to the data network, and supports a branching point (branching point) to support a multi-homed (multi-homed) PDU session.

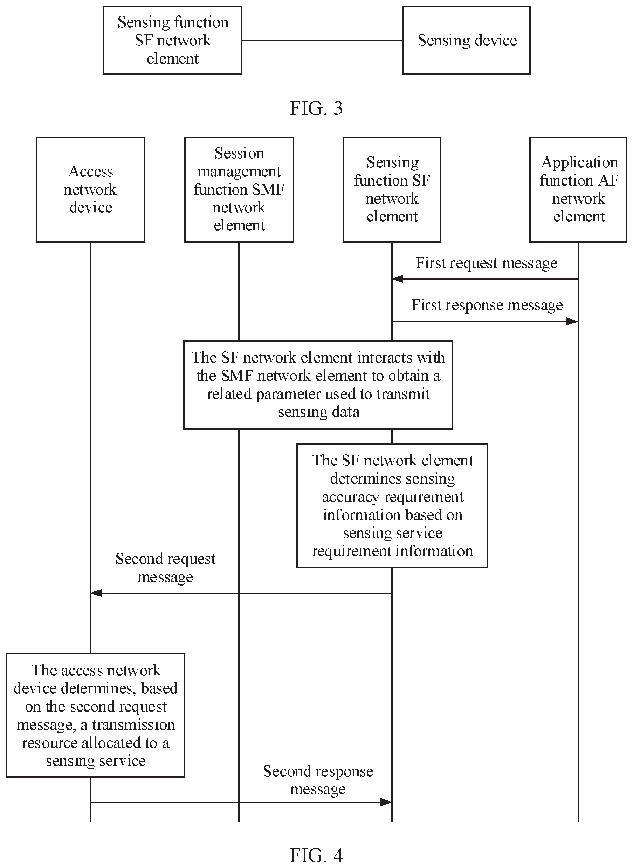

FIG. 3 is a diagram of a communication system according to an embodiment of this application. The communication system includes a sensing device and a sensing function (sensing function, SF) network element. The sensing device is a device that performs sensing. The sensing device may send a sensing signal and receive a reflected signal of the sensing signal. The sensing signal is a signal used for sensing. The sensing device may be, for example, a terminal device or an access network device. Embodiments of this application are not limited to the name "sensing device", and may alternatively use another name. For example, the "sensing device" may alternatively be replaced with a "sensing entity". For ease of description, the following uses the "sensing device" as an example for description.

The SF supports a part or all of the following functions: a session management function for sensing data transmission (for example, determining QoS for transmitting sensing data), sensing accuracy parameter management (for example, obtaining, based on a requirement of an AF network element, corresponding sensing accuracy that can be processed by a network side), and sensing data processing (for example, converting sensing measurement data into final sensing target result information).

It should be noted that the SF network element may be one of network elements in a core network, or may be a non-core network element. This is not particularly limited in this application. When the SF network element is one of the network elements in the core network, the SF network element may be connected to another network element in the core network through a service-based architecture (service-based architecture, SBA) interface, that is, may communicate with the another network element in the core network through the SBA interface. However, when the SF network element is a non-core network element, the SF network element may not be connected to the another network element in the core network through the SBA interface. In this case, the SF network element may need to interact with the another core network element through forwarding by an NEF network element.

In a possible implementation, the SF network element may include a control plane and a user plane that are separated, that is, an SF control plane (SF control plane, SF-C) function and an SF user plane (SF user plane, SF-U) function are separated. The SF-C may send a control command to an access network device by using the control plane. The SF-U may receive sensing data from the access network device by using a data plane, and optionally process the sensing data to obtain a sensing result.

In addition, the SF network element may be an independent network element, and the SF network element may communicate with another network element/device through an external interface. Alternatively, an SF may be a logical function of another network element. For example, the SF may be one of logical functions of a location management function (location management function, LMF) network element. Alternatively, the SF may be integrated with another function. A name of a network element obtained through integration is not limited in this application. For example, the SF may be integrated with an SMF and/or a UPF, and a name of an integrated network element is an SF network element or another name. Based on an actual requirement, the SF may alternatively be in another possible case. This is not limited. For ease of description, the following uses the SF network element as an example for description, and the SF network element is an independent network element, or the SF network element is a network element obtained by integrating the SF with the another function. A case in which the SF is the logical function of the another network element is similar to the foregoing case. In this case, an operation performed by the SF network element below is replaced with an operation performed by a network element to which the SF belongs. Details are not described again.

It may be understood that, in this embodiment of this application, a 5G system is used as an example for description, and when solutions in embodiments of this application are applied to a 6G system or another communication system, a corresponding network element name, a network element deployment manner, an interface, and the like may change. This is not limited in this application.

The following describes related concepts in embodiments of this application.

### 1. Procedure of establishing a sensing service

After obtaining a first request message, an SF network element may establish the sensing service, where the first request message is used to request to establish the sensing service. The first request message may include one or more of the following: information about a to-be-sensed target area, sensing service requirement information, address information of an AF network element, and start time of the sensing service. The sensing service requirement information includes one or more of the following: sensing service quality-related information, sensing data transmission control-related information, or sensing data-related information.

The sensing service quality-related information includes a type of the sensing service and/or a requirement for the sensing service. The type of the sensing service is, for example, an internet of vehicles service or an uncrewed aerial vehicle intrusion detection service. The requirement for the sensing service includes, for example, requirements for positioning accuracy, speed measurement accuracy, sensing resolution, and latency.

The sensing data transmission control-related information indicates a requirement for a frequency of transmitting sensing data. For example, the frequency of transmitting the sensing data is transmitting the sensing data once, transmitting the sensing data periodically, or transmitting the sensing data in a triggered manner. Transmitting the sensing data in the triggered manner may be understood as transmitting the sensing data when a trigger condition is met. For example, the trigger condition for a sensing device to transmit the sensing data is that information used to request to transmit the sensing data is obtained. In other words, the sensing device transmits the sensing data when or after obtaining the information used to request to transmit the sensing data. In addition, in embodiments of this application, transmitting the sensing data may be transmitting the sensing data in an uplink manner, and transmitting the sensing data in the uplink manner may also be understood as reporting the sensing data. For example, the sensing device is an access network device, and that the access network device transmits the sensing data may be that the access network device sends the sensing data to a UPF network element or the SF network element. The UPF network element may be, for example, a sensing UPF network element (namely, a sensing-UPF network element). The SF network element may be, for example, a user plane function (for example, an SF-U) of the SF network element. Details are not described again below.

The sensing data-related information indicates a requirement for a type of the to-be-transmitted sensing data. For example, a required sensing data type is point cloud (point cloud) information. The point cloud information is a set including points that are on a reflection surface and at which sensing signals are reflected by an object, where the sensing signals are signals used for sensing. For example, a required sensing data type is a sensing result. The sensing result may also be understood as a final measurement result. The final measurement result may be, for example, description information of a measured object. For example, event description information is used to describe whether there is an intruder in a given sensing area. For another example, event description information is used to describe a drawn three-dimensional (three-dimensional, 3D) map. For another example, event description information is used to describe a to-be-sensed target sensed in a given sensing area (for example, the to-be-sensed target is a vehicle, and the description information of the event is used to describe the vehicle sensed in the given sensing area).

In addition, in addition to the mentioned content, the sensing service requirement information may include another requirement for the sensing service. This is not limited.

In addition, a manner in which the SF network element obtains the first request message is not limited in embodiments of this application. For example, the AF network element directly sends the first request message to the SF network element. This manner may be applied to a case in which the AF network element is located in a trust domain (trust domain) of a network. For another example, the AF network element sends the first request message to the SF network element by using an intermediate network element (for example, an NEF network element). It should be noted that the intermediate network element may send, to the SF network element, the first request message that is received by the intermediate network element from the AF network element, or information generated by the intermediate network element based on the first request message sent by the AF network element. For another example, the SF network element locally configures the first request message, or the SF network element subscribes to the first request message, or the SF network element obtains the first request message by using a UDM network element. For another example, the SF network element obtains the first request message by using a network configuration. For example, an operation and maintenance (operation and maintenance, OAM) system may provide the first request message for the SF network element.

In addition, in embodiments of this application, the "AF network element" may alternatively be replaced with an "application server", a "third-party application", a "data collector", an "application requester", or the like. For ease of description, in embodiments of this application, the "AF network element" is used as an example for description. Details are not described again below.

The following describes an example of the procedure of establishing the sensing service by using an example in which the AF network element sends the first request message to the SF network element and by using two scenarios in which the sensing device is an access network device and the sensing device is a terminal device as examples, as described in the following optional Manner a and Manner b.

### Manner a: scenario in which the sensing device is the access network device

With reference to FIG. 4, the procedure of establishing the sensing service includes: The AF network element sends the first request message to the SF network element. Correspondingly, the SF network element receives the first request message from the AF network element. The SF network element sends a first response message to the AF network element, where the first response message includes identification information of the sensing service. Correspondingly, the AF network element receives the first response message from the SF network element. The SF network element interacts with an SMF network element to obtain a related parameter used to transmit the sensing data. The SF network element determines sensing accuracy requirement information based on the sensing service requirement information. The SF network element sends a second request message to the access network device, where the second request message includes the sensing accuracy requirement information and the related parameter used to transmit the sensing data. Correspondingly, the access network device receives the second request message from the SF network element. The access network device determines, based on the second request message, a transmission resource allocated to the sensing service. The access network device sends a second response message to the SF network element, where the second response message is a response message corresponding to the second request message, the second response message may include, for example, information #1, and the information #1 indicates the transmission resource allocated to the sensing service.

After the sensing service is established, the access network device may collect the sensing data based on the transmission resource allocated to the sensing service, and send the sensing data to the SF network element directly or by using the UPF network element, and then the SF network element sends the sensing data to the AF network element. In addition, it should be noted that the SF network element may send (/report), to the AF network element, the sensing data collected by the SF network element, or data obtained after the SF network element processes the collected sensing data. This is not limited.

In embodiments of this application, the identification information of the sensing service may be, for example, a sensing identifier (identity, ID) (namely, a sensing ID). The sensing ID may represent a specific sensing service (inside an operator). For example, a numbering rule of the sensing ID is combining an operator identifier and a sensing service identifier, where the "sensing service identifier" may also be understood as a "sensing business identifier". For example, the sensing ID may be represented as [operator identifier][sensing service identifier], where each field may be represented by a binary, octal, decimal, or hexadecimal number.

In a possible implementation method, the operator preconfigures a range of sensing service identifiers that can be allocated by the SF network element. After the SF network element obtains the first request message, the SF network element allocates an unallocated sensing service identifier as the identification information of the sensing service. For example, the sensing service identifier is represented by the binary number. The operator preconfigures a range being 000 to 111 (binary) of sensing service identifiers that can be allocated by an SF network element #1. In 000 to 111, unallocated sensing service identifiers are 100 to 111. In this case, after the SF network element #1 obtains the first request message, the SF network element #1 may select a sensing service identifier from 100 to 111 as identification information of a sensing service #1. For example, the SF network element #1 selects "101" from 100 to 111 as the identification information of the sensing service #1.

In embodiments of this application, the related parameter used to transmit the sensing data may include, for example, a QoS profile (QoS profile) used to transmit the sensing data and information about a tunnel used to transmit the sensing data. The QoS profile may include one or more of the following: a QoS identifier (QoS identifier), an allocation and retention priority (allocation and retention priority, ARP), a guaranteed bit rate (guaranteed bit rate, GBR), or a maximum bit rate (maximum bit rate, MBR). The QoS identifier may be, for example, a 5G QoS identifier (5G QoS identifier, 5QI). In addition, in addition to the mentioned content, the QoS profile may include another QoS requirement for transmitting the sensing data. This is not limited.

In embodiments of this application, in a possible implementation method, the sensing accuracy requirement information includes one or more levels of sensing accuracy requirements. This implementation may be applied to a scenario in which the sensing service requirement information in the first request message includes one or more pieces of sensing service quality-related information. In this scenario, it may be understood that one sensing service may correspond to one or more pieces of sensing service quality-related information, and different sensing service quality-related information are not completely the same. For example, the sensing accuracy requirement information includes two levels of sensing accuracy requirements, as shown in the following Table 1.

**Table 1**

| Level | Accuracy of positioning estimate by sensing | Sensing resolution | Maximum sensing service latency | Refresh rate | Missed detection rate | False detection rate |
|---|---|---|---|---|---|---|
| Level 1 | ≤1 meter | <1 meter | ≤1000 milliseconds | ≤1 second | ≤2% | ≤2% |
| Level 2 | ≤5 meters | <5 meters | <1000 milliseconds | <1 second | ≤5% | ≤2% |

It can be learned from Table 1 that, in a sensing accuracy requirement corresponding to the level 1, a requirement for accuracy of positioning estimate by sensing (accuracy of positioning estimate by sensing) is that the accuracy of positioning estimate by sensing≤1 meter (meter, m); a requirement for sensing resolution (sensing resolution) is that the sensing resolution<1 m; a requirement for maximum sensing service latency (max sensing service latency) is that the maximum sensing service latency≤1000 milliseconds (milliseconds, ms); a requirement for a refresh rate is that the refresh rate≤1 second (second, s); a requirement for a missed detection rate is that the missed detection rate≤2%; and a requirement for a false detection rate is that the false detection rate≤2%.

In a sensing accuracy requirement corresponding to the level 2, a requirement for accuracy of positioning estimate by sensing is that the accuracy of positioning estimate by sensing≤5 m; a requirement for sensing resolution is that the sensing resolution<5 m; a requirement for maximum sensing service latency is that the maximum sensing service latency<1000 ms; a requirement for a refresh rate is that the refresh rate<1s; a requirement for a missed detection rate is that the missed detection rate≤5%; and a requirement for a false detection rate is that the false detection rate≤2%.

Optionally, when the sensing accuracy requirement information includes a plurality of levels of sensing accuracy requirements, the access network device may autonomously adjust a used sensing accuracy requirement. For example, with reference to Table 1, the access network device allocates a transmission resource #1 to the sensing service based on the sensing accuracy requirement of the level 1. Then, the access network device finds that the transmission resource #1 cannot meet the sensing accuracy requirement of the level 1. The access network device adjusts the used sensing accuracy requirement to the sensing accuracy requirement of the level 2. However, the access network device may not change the transmission resource allocated to the sensing service, that is, the transmission resource allocated to the sensing service is still the transmission resource #1.

### Manner b: scenario in which the sensing device is the terminal device

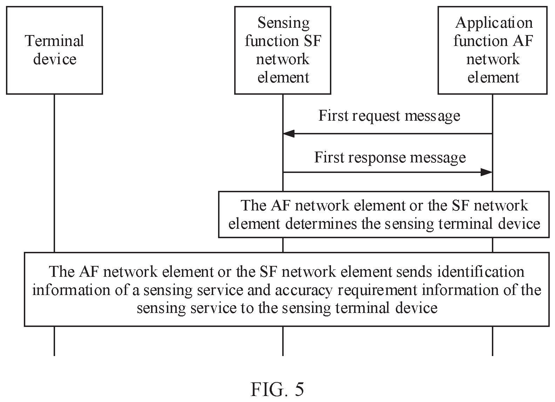

With reference to FIG. 5, the procedure of establishing the sensing service includes: The AF network element sends the first request message to the SF network element. Correspondingly, the SF network element receives the first request message from the AF network element. The SF network element sends a first response message to the AF network element, where the first response message includes identification information of the sensing service. Correspondingly, the AF network element receives the first response message from the SF network element. The AF network element or the SF network element determines the sensing terminal device. The AF network element or the SF network element sends identification information of the sensing service and accuracy requirement information of the sensing service to the sensing terminal device. In addition, the network further establishes a channel used to transmit the sensing data, where the channel is used by the terminal device to send the sensing data to the AF network element by using the UPF network element and the SF network element.

That the AF network element or the SF network element determines the sensing terminal device may be, for example, that the AF network element or the SF network element may determine the sensing terminal device based on information about a sensed target area in the first request message. In addition, for specific descriptions of the identification information of the sensing service, refer to related descriptions in Manner a. The accuracy requirement information of the sensing service may include, for example, positioning accuracy information, speed measurement accuracy information, the sensing resolution, and the latency. For the accuracy requirement information of the sensing service, refer to related descriptions of the sensing accuracy requirement information in Manner a. Details are not described again. In addition, information sent by the AF network element or the SF network element to the sensing terminal device may be directly sent to the terminal device, or may be sent to the terminal device by using an intermediate network element (for example, an access network device on which the terminal device camps). This is not limited.

After the sensing service is established, the terminal device may collect the sensing data, and send the sensing data to the UPF network element. The UPF network element sends the sensing data to the SF network element, and then the SF network element sends the sensing data to the AF network element. In addition, it should be noted that the SF network element may send (/report), to the AF network element, the sensing data collected by the SF network element, or data obtained after the SF network element processes the collected sensing data. This is not limited. The SF network element may report the sensing data by using a user plane (for example, an SF-U), or may report the sensing data by using a control plane (for example, an SF-C). This is not limited.

In addition, the information transmission method in embodiments of this application may be applied to a scenario in which the sensing service is established. Manner a and Manner b are merely examples for describing the procedure of establishing the sensing service. In the scenario in which the sensing service is established and to which the information transmission method in embodiments of this application is applied, a specific procedure of establishing the sensing service is not limited.

It should be noted that the term "determine" mentioned in embodiments of this application may specifically refer to a specific action of "determining", or may be replaced with "find". This is not limited.

The following describes embodiments of this application in detail with reference to accompanying drawings. In embodiments of this application, an example in which an SF network element, an AF network element, and a sensing device are used as execution bodies is used to illustrate a corresponding method. However, an execution body of the method is not limited in this application. For example, the network element/device in the method may alternatively be a chip, a chip system, or a processor that supports the network element/device in implementing the corresponding method, or may be a logical module or software that can implement all or a part of functions of the network element/device.

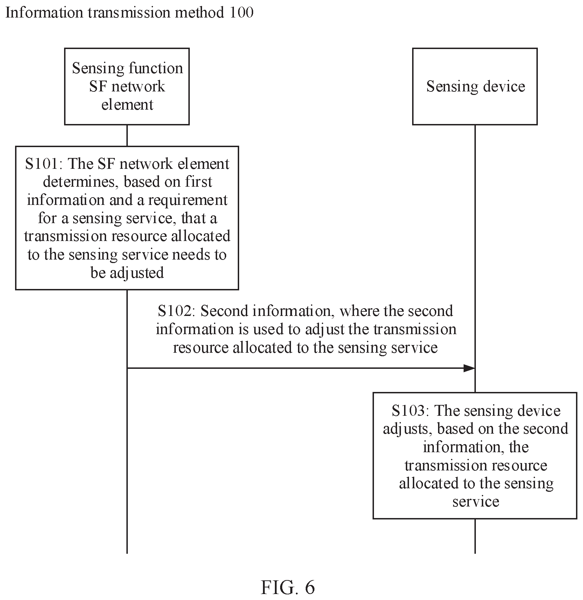

FIG. 6 is a schematic flowchart of an information transmission method 100 according to an embodiment of this application. The information transmission method 100 includes the following steps.

S101: The SF network element determines, based on first information and a requirement for a sensing service, that a transmission resource allocated to the sensing service needs to be adjusted.

The first information includes one or more of the following: error event information, an error event proportion, or a performance parameter that does not meet the requirement, and the first information is determined based on sensing data corresponding to the sensing service.

In addition, in this embodiment of this application, the sensing data may correspond to one sensing service, or may correspond to a plurality of sensing services. The sensing data may be obtained by the sensing device by performing sensing and collection for the sensing service, or the sensing data may be obtained by the sensing device by performing sensing and collection based on a capability of the sensing device, and then used for the sensing service. This is not limited.

In addition, in this embodiment of this application, the sensing data may be, for example, point cloud (point cloud) information, and the sensing data may alternatively be, for example, a sensing result. In addition, when the sensing data is not the sensing result (for example, the sensing data is the point cloud information), the sensing result may be determined based on the sensing data. For specific descriptions of the point cloud information and the sensing result, refer to the foregoing related descriptions. Details are not described again.

In an optional implementation, the error event information includes an error event. Optionally, the error event information further includes time information corresponding to the error event. The time information corresponding to the error event may be represented, for example, by a specific moment, or may be represented by a time identifier. The time identifier in the time information corresponding to the error event may be, for example, a series number of a time window to which the error event belongs, or may be a series number of a time series to which the error event belongs. A manner of representing the time information is not limited in embodiments of this application.

Optionally, the error event includes one or more of the following: a missed detection event, a false detection event, or an inaccurate sensing accuracy event. For example, the missed detection event may be represented as that a to-be-sensed target is not sensed. For example, if the to-be-sensed target is a vehicle, and an actually existing vehicle #1 is not sensed, it indicates that missed detection occurs for the vehicle #1. For example, the false detection event may be represented as that a non-to-be-sensed target is sensed as a to-be-sensed target. For example, if the to-be-sensed target is a motor vehicle, and a vehicle #1 is sensed, but the vehicle #1 is actually a non-motor vehicle, it indicates that false detection occurs for the vehicle #1. For example, the false detection event may alternatively be represented as that a to-be-sensed target is sensed in a scenario in which the to-be-sensed target does not exist. For example, if the to-be-sensed target is a vehicle, and there are only a vehicle #1 and a vehicle #2 actually, but the vehicle #1, the vehicle #2, and a vehicle #3 are sensed, it indicates that false detection occurs for the vehicle #3. The false detection event may also be referred to as a detection error event. In addition, in addition to the mentioned event, the error event may further include another type of event. This is not limited.

The following describes the error event by using examples, as described in the following optional Implementation 1.1 to Implementation 1.4.

Implementation 1.1: The error event is determined by comparing the sensing data (or the sensing result obtained based on the sensing data) with information obtained in another manner (for example, information obtained by using a camera).

For example, a to-be-sensed target is a vehicle, and a sensing area is an area #1. It is determined based on the sensing data that a vehicle #1 and a vehicle #2 are sensed in the area #1 at a moment #1. A picture shot by the camera shows that there are the vehicle #1, the vehicle #2, and a vehicle #3 in the area #1 at the moment #1. In this case, that the vehicle #3 is not sensed in the area #1 at the moment #1 is a missed detection event.

Implementation 1.2: The error event is determined by comparing information that is at a time granularity in the sensing data (or the sensing result obtained based on the sensing data).

For example, a to-be-sensed target is a vehicle, and a sensing area is an area #1. It is determined based on the sensing data that a vehicle #1, a vehicle #2, a vehicle #3, a vehicle #4, and a vehicle #5 are sensed in the area #1 at a moment #1; the vehicle #1, the vehicle #2, the vehicle #3, and the vehicle #5 are sensed in the area #1 at a moment #2; and the vehicle #1, the vehicle #2, the vehicle #3, the vehicle #4, and the vehicle #5 are sensed in the area #1 at a moment #3. It can be learned that the vehicle #4 is sensed at both the moment #1 and the moment #3, but the vehicle #4 is not sensed at the moment #2. In this case, it may be determined that the vehicle #4 being not sensed at the moment #2 is a missed detection event, and time information corresponding to the missed detection event is, for example, the moment #2.

For another example, a to-be-sensed target is a vehicle, and a sensing area is an area #1. It is determined based on the sensing data that only a vehicle #1, a vehicle #2, a vehicle #3, and a vehicle #4 are sensed at all of a moment #1, a moment #2, a moment #4, a moment #5, and a moment #6, and a vehicle #5 is sensed at a moment #3 in addition to the vehicle #1, the vehicle #2, the vehicle #3, and the vehicle #4. It can be learned that the vehicle #5 is not sensed at all of the moment #1, the moment #2, the moment #4, the moment #5, and the moment #6, but the vehicle #5 is sensed at the moment #3. In this case, it may be determined that the vehicle #5 being sensed at the moment #3 is a false detection event, and time information corresponding to the false detection event is, for example, the moment #3.

Implementation 1.3: The error event is determined by comparing the sensing data (or the sensing result obtained based on the sensing data) with historical information. The historical information may be, for example, previously recorded sensing data or a previously recorded sensing result.

For example, it is determined based on the historical information that there is a vehicle #1 in an area #1 at 9:00 a.m. and 10:00 a.m. every day from a 1^{st} day to a 15^{th} day. It is determined based on the sensing data that the vehicle #1 is not sensed in the area #1 at 9:00 a.m. on a 16^{th} day, and the vehicle #1 is sensed in the area #1 at 10:00 a.m. on the 16^{th} day. In this case, it may be determined that the vehicle #1 being not sensed in the area #1 at 9:00 a.m. on the 16^{th} day is a missed detection event.

Implementation 1.4: The error event is determined by comparing the sensing data (or the sensing result obtained based on the sensing data) with information obtained based on a user feedback.

For example, it is determined based on the sensing data that no traffic accident is sensed in a road section #1 at a moment #1. It is determined, based on the information fed back by a user, that a traffic accident occurs in the road section #1 at the moment #1. In this case, it may be determined that no traffic accident being sensed in the road section #1 at the moment #1 is a missed detection event.

For another example, it is determined based on the sensing data that a traffic accident is sensed in a left lane of a road section #1 at a moment #1. It is determined, based on the information fed back by a user, that a traffic accident occurs in a right lane of the road section #1 at the moment #1. In this case, it may be determined that the traffic accident being sensed in the left lane of the road section #1 at the moment #1 is a false detection event.

In addition, the error event may be determined based on one or more of Implementation 1.1 to Implementation 1.4, or the error event may be determined in another manner, or the error event may be determined by combining the one or more of Implementation 1.1 to Implementation 1.4 with the another manner. A manner of determining the error event is not limited in embodiments of this application.

In an optional implementation, the error event proportion is a proportion of the error event. It may be understood that the error event proportion may be determined based on the error event. For example, the error event proportion may be a proportion of an error event in a plurality of consecutive times of sensing. For example, the error event proportion may be a proportion of an error event in a measurement window, and the measurement window may be, for example, a time window that is predefined (or configured or determined in another manner). Optionally, the error event proportion includes one or more of the following: a missed detection event proportion, a false detection event proportion, or an inaccurate sensing accuracy event proportion. The missed detection event proportion may also be understood as a missed detection rate, and the false detection event proportion may also be understood as a false detection rate. In addition, in addition to the mentioned content, the error event proportion may include a proportion of another type of event. This is not limited.

For example, if a measurement window #1 includes 20 time series, and missed detection events occur in two of the 20 time series, the missed detection event proportion is 10%. If false detection events occur in three of the 20 time series, the false detection event proportion is 15%.

In an optional implementation, the performance parameter that does not meet the requirement is a performance parameter that does not meet the requirement for the sensing service. There may be one or more performance parameters that do not meet the requirement. For example, the performance parameter may be accuracy of positioning estimate by sensing (accuracy of positioning estimate by sensing), sensing resolution (sensing resolution), maximum sensing service latency (max sensing service latency), a refresh rate, a missed detection rate, or a false detection rate. In addition, the performance parameter may alternatively be another performance parameter except the mentioned performance parameter. A type of the performance parameter is not limited in embodiments of this application.

Optionally, the performance parameter that does not meet the requirement may be determined based on the requirement for the sensing service and the error event information or the error event proportion. For example, for a sensing service of uncrewed aerial vehicle (unmanned aerial vehicle, UAV) intrusion detection, a requirement for a missed detection rate is that the missed detection rate is less than 5%. For example, a measurement window #1 includes 20 time series, and missed detection events occur in two of the 20 time series. It can be learned that a missed detection event proportion is 10%, and the missed detection rate does not meet the requirement. In this case, the performance parameter that does not meet the requirement includes the missed detection rate. For another example, a measurement window #2 includes 40 time series, and a missed detection event occur in one of the 40 time series. It can be learned that a missed detection event proportion is 2.5%, and the missed detection rate meets the requirement. In this case, the performance parameter that does not meet the requirement does not include the missed detection rate.

In addition, in this embodiment of this application, in addition to the foregoing mentioned content, the first information may include other information determined based on the sensing data. For example, the first information may further include other information obtained by analyzing or processing the sensing data, for example, may further include a specific value of the performance parameter that does not meet the requirement. This is not limited.

The following describes a manner of obtaining the first information by using examples, as described in the following optional Implementation 2.1 and Implementation 2.2.

Implementation 2.1: The method further includes: The AF network element sends the first information to the SF network element. Correspondingly, the SF network element receives the first information from the AF network element.

For example, after receiving the sensing data from the sensing device, the SF network element sends the sensing data to the AF network element. The AF network element determines, based on the sensing data, whether the sensing result is incorrect. If the AF network element determines that the sensing result is incorrect, the AF network element sends the first information to the SF network element. Whether the sensing result is incorrect may also be understood as whether the sensing result is accurate. Optionally, that the AF network element determines, based on the sensing data, whether the sensing result is incorrect includes: The AF network element determines, based on the sensing data, whether there is an error event, and if there is the error event, determines that the sensing result is incorrect. It may be understood that, if the AF network element determines, based on the sensing data, that there is the error event, it may be considered that the sensing data is inaccurate, and therefore it is considered that the sensing result is incorrect. In addition, for specific descriptions of a manner of determining the error event and a manner of determining the first information, refer to the foregoing related descriptions. Details are not described again.

In addition, a frequency at which "the AF network element sends the first information to the SF network element" is not limited in embodiments of this application. For example, the AF network element may send the first information to the SF network element periodically, or may send the first information to the SF network element aperiodically, or may send the first information to the SF network element when a trigger condition is met. The following provides descriptions by using examples.

For example, the AF network element sends the first information to the SF network element with a periodicity of t₀. The AF network element determines first information #1 based on sensing data obtained in a period of time from t to t+t₀, and the AF network element sends the first information #1 to the SF network element at a moment t+t₀ (or near the moment t+t₀); the AF network element determines first information #2 based on sensing data obtained in a period of time from t+t₀ to t+2t₀, and the AF network element sends the first information #2 to the SF network element at a moment t+2t₀ (or near the moment t+2t₀); the AF network element determines first information #2 based on sensing data obtained in a period of time from t+2t₀ to t+3t₀, and the AF network element sends the first information #3 to the SF network element at a moment t+3t₀ (or near the moment t+3t₀); and so on.

For another example, each time the AF network element determines M error events, the AF network element performs once an operation of sending, to the SF network element, first information including the M error events, where M is a positive integer. For example, M is equal to 1. The AF network element determines an error event #1, and the AF network element sends first information #1 to the SF network element, where the first information #1 includes the error event #1. Then, the AF network element determines an error event #2, and the AF network element sends first information #2 to the SF network element, where the first information #2 includes the error event #2.

Optionally, the method further includes: The AF network element sends identification information of the sensing service to the SF network element. Correspondingly, the SF network element receives the identification information of the sensing service from the AF network element. In this manner, the SF network element learns of the sensing service corresponding to the first information. For example, if the AF network element determines, based on the sensing data corresponding to the sensing service, that the sensing result is incorrect, the AF network element sends the first information and the identification information of the sensing service to the SF network element. Optionally, the identification information of the sensing service may be determined by the SF network element in a process of establishing the sensing service. For the identification information of the sensing service and a procedure of establishing the sensing service, refer to the foregoing related descriptions. Details are not described herein again.

Optionally, the method further includes: The AF network element sends seventh information to the SF network element, where the seventh information is used to request to adjust the transmission resource allocated to the sensing service. It may be understood that, even if the SF network element receives the seventh information, the SF network element may still perform the operation of "determining, based on first information and a requirement for a sensing service, that a transmission resource allocated to the sensing service needs to be adjusted".

In addition, one or more of the following: the first information, the identification information of the sensing service, or the seventh information, sent by the AF network element to the SF network element may be carried, for example, in a sensing service notification message sent by the AF network element to the SF network element. The sensing service notification message may be, for example, a sensing service update request (Nsf_SensingSession_Update Request) message.

In addition, in this embodiment of this application, information (for example, the first information, the identification information of the sensing service, or the seventh information) sent by the AF network element to the SF network element may be directly sent by the AF network element to the SF network element. This manner may be applied to a case in which the AF network element is located in a trust domain of a network. Alternatively, the information (for example, the first information, the identification information of the sensing service, or the seventh information) sent by the AF network element to the SF network element may be sent by the AF network element to the SF network element by using an intermediate network element (for example, an NEF network element). It should be noted that the intermediate network element may send, to the SF network element, the information that is received by the intermediate network element from the AF network element, or information generated by the intermediate network element based on the information sent by the AF network element. Details are not described again below.

Optionally, the method further includes: The SF network element sends response information to the AF network element, where the response information indicates that the SF network element receives the first information. Optionally, in a scenario in which the AF network element further sends the identification information of the sensing service and/or the seventh information to the SF network element, the response message may further indicate that the SF network element receives the identification information of the sensing service and/or the seventh information. The response message may be, for example, a sensing service update response (Nsf_SensingSession_Update Response) message.

Implementation 2.2: The method further includes: The SF network element determines the first information based on the sensing data corresponding to the sensing service. This implementation may be applied to a case in which the SF network element has a capability of determining the sensing result based on the sensing data. In this case, the SF network element can determine the sensing result based on the sensing data (for example, the sensing data is point cloud information, and the SF network element may determine the sensing result based on the point cloud information), so that the SF network element can determine the first information based on the sensing result. In addition, for specific descriptions of a manner of determining the first information, refer to the foregoing related descriptions. Details are not described again.

In an optional implementation, that the SF network element determines, based on the first information and the requirement for the sensing service, that the transmission resource allocated to the sensing service needs to be adjusted includes: The SF network element determines, based on the first information and the requirement for the sensing service, whether the requirement for the sensing service is met, and if the requirement for the sensing service is not met, determines that the transmission resource allocated to the sensing service needs to be adjusted.

In addition, in this embodiment of this application, that the requirement for the sensing service is met may also be understood as that all requirements for the sensing service are met. That the requirement for the sensing service is not met may also be understood as that a part or all of the requirements for the sensing service are not met. For example, requirements for a sensing service #1 are a requirement for a missed detection rate corresponding to the sensing service #1, a requirement for a false detection rate corresponding to the sensing service #1, and a requirement for a refresh rate corresponding to the sensing service #1. That the requirements for the sensing service #1 are met may also be understood as that all the requirements for the missed detection rate, the false detection rate, and the refresh rate that correspond to the sensing service #1 are met. That the requirements for the sensing service #1 are not met may also be understood as that a requirement for one or more of the missed detection rate, the false detection rate, and the refresh rate that correspond to the sensing service #1 is not met.

In addition, in this embodiment of this application, in a scenario in which the requirement for the sensing service is not met, adjusting the transmission resource allocated to the sensing service may be increasing the transmission resource allocated to the sensing service. It may be understood that, in the scenario in which the requirement for the sensing service is not met, the transmission resource allocated to the sensing service is increased, to help meet the requirement for the sensing service.

In addition, in this embodiment of this application, the transmission resource may include a resource used to send a sensing signal and/or a resource used to receive a reflected signal corresponding to the sensing signal. The transmission resource may be, for example, a time domain resource and/or a frequency domain resource and/or a space domain resource, or may be a resource in another domain. This is not limited. The transmission resource may also be understood as an air interface resource. Details are not described again below.

The following describes, by using examples, a specific manner in which the SF network element determines whether the requirement for the sensing service is met, as described in the following optional Implementation 3.1 to Implementation 3.3.

Implementation 3.1: The SF network element determines, based on the error event information and the requirement for the sensing service, whether the requirement for the sensing service is met.

For example, the requirement for the sensing service is a requirement for the missed detection rate corresponding to the sensing service. The requirement for the missed detection rate corresponding to the sensing service is that the missed detection rate is less than or equal to 5%. For example, a measurement window #1 includes 20 time series. It is determined based on the error event information that missed detection events actually occur in two of the 20 time series, and a missed detection rate is 10%. It can be learned that the missed detection rate corresponding to the measurement window #1 does not meet the requirement for the missed detection rate. Therefore, it can be determined that the requirement for the sensing service is not met for the measurement window #1. For another example, a measurement window #2 includes 40 time series. It is determined based on the error event information that a missed detection event actually occurs in one of the 40 time series, and a missed detection rate is 2.5%. It can be learned that the missed detection rate corresponding to the measurement window #2 meets the requirement for the missed detection rate. Therefore, it can be determined that the requirement for the sensing service is met for the measurement window #2.

For another example, the error event information is sent by the AF network element to the SF network element. Each time the AF network element determines an error event, the AF network element sends the error event to the SF network element. A requirement for the missed detection rate corresponding to the sensing service is that the missed detection rate is less than or equal to 5%. A measurement window #1 includes 20 time series. When the SF network element receives a 2^{nd} missed detection event for the measurement window #1, the SF network element may determine that the requirement for the sensing service is not met.

Implementation 3.2: The SF network element determines, based on the error event proportion and the requirement for the sensing service, whether the requirement for the sensing service is met. The error event proportion may be included in the first information, or may be determined based on the error event information in the first information.

For example, the requirement for the sensing service is a requirement for the missed detection rate corresponding to the sensing service. The requirement for the missed detection rate corresponding to the sensing service is that the missed detection rate is less than or equal to 5%. For example, for a measurement window #1, a missed detection event proportion is 10%. It can be learned that the missed detection rate corresponding to the measurement window #1 does not meet the requirement for the missed detection rate. Therefore, it can be determined that the requirement for the sensing service is not met for the measurement window #1. For another example, for a measurement window #2, a missed detection event proportion is 2.5%. It can be learned that the missed detection rate corresponding to the measurement window #2 meets the requirement for the missed detection rate. Therefore, it can be determined that the requirement for the sensing service is met for the measurement window #2.

Implementation 3.3: The SF network element determines, based on the requirement for the sensing service and the performance parameter that does not meet the requirement, whether the requirement for the sensing service is met. It may be understood that, if the performance parameter that does not meet the requirement in the first information is not defaulted, it indicates that there is a performance parameter that does not meet the requirement, and therefore it can be determined that the requirement for the sensing service is not met. For example, in a scenario in which the first information is sent by the AF network element to the SF network element, if the performance parameter that does not meet the requirement in the first information received by the SF network element from the AF network element is not defaulted, the SF network element may determine that there is the performance parameter that does not meet the requirement, and therefore determine that the requirement for the sensing service is not met.

In addition, in an optional manner, if the requirement for the sensing service is met, the SF network element may send fifth information to the sensing device, where the fifth information is used to request to reduce the transmission resource allocated to the sensing service. This helps avoid resource waste caused by allocation of excessive transmission resources to the sensing service. Alternatively, if the requirement for the sensing service is met, the SF network element may not send the fifth information to the sensing device.

In an optional implementation, the SF network element may determine, based on the first information and the requirement for the sensing service, whether the transmission resource allocated to the sensing service needs to be adjusted. If the transmission resource allocated to the sensing service needs to be adjusted, step S102 is performed.

S102: The SF network element sends second information to the sensing device, where the second information is used to adjust the transmission resource allocated to the sensing service. Correspondingly, the sensing device receives the second information from the SF network element.

For example, the second information is specifically used to increase the transmission resource allocated to the sensing service. This manner may be applied to a scenario in which the SF network element determines, when the requirement for the sensing service is not met, that the transmission resource allocated to the sensing service needs to be adjusted. It may be understood that, in the scenario in which the requirement for the sensing service is not met, the transmission resource allocated to the sensing service is increased, to help meet the requirement for the sensing service.

In an optional implementation, the second information includes one or more of the following: the performance parameter that does not meet the requirement, or a gap between the performance parameter that does not meet the requirement and the requirement. Optionally, the performance parameter that does not meet the requirement may be determined based on the first information. For specific descriptions, refer to the foregoing related descriptions. Details are not described again. In addition, the second information may further include other information. For example, the second information may further include the specific value of the performance parameter that does not meet the requirement. This is not limited.

For example, the missed detection rate determined based on the sensing data is 10%, and the requirement for the missed detection rate is that the missed detection rate is less than or equal to 8%. In this case, the second information may include the missed detection rate and 2%, indicating that the missed detection rate does not meet the requirement and a difference between the missed detection rate and the requirement is 2%.

Optionally, the second information further includes the identification information of the sensing service. This implementation helps the sensing device determine, based on the identification information of the sensing service, the sensing service for which the transmission resource is to be adjusted. For specific descriptions of the identification information of the sensing service, refer to the foregoing related descriptions. Details are not described herein again.

In an optional implementation, the second information is specifically used to request to adjust the transmission resource allocated to the sensing service. It may be understood that the SF network element may request the sensing device to adjust the transmission resource.

In an optional implementation, the second information is specifically used to request to adjust, for a first performance parameter, the transmission resource allocated to the sensing service, where the first performance parameter is a performance parameter that does not meet the requirement. It may be understood that the SF network element may request the sensing device to adjust the transmission resource for a specific performance parameter. For example, if the requirement for the missed detection rate is not met, the second information may be specifically used to request to adjust, for the missed detection rate, the transmission resource allocated to the sensing service. In this way, the sensing device can adjust, for the missed detection rate, the transmission resource allocated to the sensing service, so that an adjusted transmission resource helps meet the requirement for the missed detection rate.

In an optional implementation, that the SF network element sends the second information to the sensing device includes: The SF network element sends the second information to the sensing device by using an intermediate network element. Alternatively, the SF network element directly sends the second information to the sensing device without using the intermediate network element.

In addition, in this embodiment of this application, in the implementation in which the SF network element sends the second information to the sensing device by using the intermediate network element, the intermediate network element may send, to the sensing device, the second information received from the SF network element, or information generated based on the second information received from the SF network element. This is not limited. For ease of description, in this embodiment of this application, an example in which the intermediate network element sends, to the sensing device, the second information received from the SF network element is used for description.

In an optional manner, the sensing device is an access network device. The SF network element sends the second information to the access network device by using the intermediate network element (for example, an AMF network element). Alternatively, the SF network element directly sends the second information to the access network device without using the intermediate network element.

For example, in the process of establishing the sensing service, the SF network element may record address information or identification information of a next-hop node to which the SF network element sends the second information. For example, the next-hop node to which the SF network element sends the second information is the AMF network element. The SF network element records address information or identification information of the AMF network element. The AMF network element records information about the access network device (for example, identification information of the access network device, address information of the access network device, or a tunnel identifier). The address information of the AMF network element may be, for example, a callback uniform resource identifier (callback uniform resource identifier, callback URI). The identification information of the AMF network element may be, for example, an AMF ID or an AMF instance ID (namely, an AMF instance ID). For another example, the next-hop node to which the SF network element sends the second information is the access network device. The SF network element records address information or identification information of the access network device. The address information of the access network device may be, for example, a RAN ID or an IP address. The identification information of the access network device may be, for example, a tunnel identifier (tunnel endpoint ID, TEID).

In another optional manner, the sensing device is a terminal device. The SF network element sends the second information to the terminal device by using the intermediate network element; or the SF network element directly sends the second information to the terminal device without using the intermediate network element.

For example, the SF network element sends the second information to the terminal device by using an SMF network element and an AMF network element. Specifically, the SF network element sends the second information to the SMF network element, the SMF network element sends the second information to the AMF network element, and then the AMF network element sends the second information to the terminal device. This manner may be applied to a scenario in which the SMF network element subscribes in advance to an update message of the sensing service from the SF network element. In this scenario, the SF network element may determine the SMF network element, so that the SF network element can send the second information to the SMF network element.

For example, the SF network element sends the second information to the terminal device by using an AMF network element. Specifically, the SF network element sends the second information to the AMF network element, and then the AMF network element sends the second information to the terminal device. This implementation may be applied to a scenario in which the SF network element can determine identification information of the terminal device. In this scenario, the SF network element may obtain, based on the identification information of the terminal device, information about the AMF network element corresponding to the terminal device. For example, the SF network element may query, based on the identification information of the terminal device, a UDM network element for the information about the AMF network element corresponding to the terminal device. In addition, the identification information of the terminal device may be sent by the AF network element to the SF network element.

For example, the SF network element sends the second information to the terminal device by using a PCF network element, an SMF network element, and an AMF network element. Specifically, the SF network element sends the second information to the PCF network element, the PCF network element sends the second information to the SMF network element, the SMF network element sends the second information to the AMF network element, and then the AMF network element sends the second information to the terminal device.

S103: The sensing device adjusts, based on the second information, the transmission resource allocated to the sensing service.

That the sensing device adjusts the transmission resource allocated to the sensing service includes, for example, increasing a quantity of orthogonal frequency division multiplexing (orthogonal frequency division multiplexing, OFDM) transmission symbols.

In an optional implementation, the sensing device is the terminal device, and the method further includes: The SF network element sends the second information to an access network device corresponding to the terminal device. Correspondingly, the access network device receives the second information from the SF network element. The access network device allocates, to the terminal device based on the second information, the transmission resource corresponding to the sensing service. The access network device corresponding to the terminal device may be understood as an access network device on which the terminal device camps. This implementation may be applied to a scenario in which the transmission resource used by the terminal device is a resource controlled by an operator. In this scenario, the transmission resource used by the terminal device is allocated to the terminal device by the access network device corresponding to the terminal device. It may be understood that the access network device adjusts, based on the second information, the transmission resource allocated to the terminal device. The access network device may exchange, with the terminal device, information related to the transmission resource, so that the terminal device can determine the transmission resource.

In an optional manner, the method further includes: The SF network element sends the identification information of the terminal device to the access network device corresponding to the terminal device. The identification information of the terminal device may be, for example, a system architecture evolution (system architecture evolution, SAE) temporary mobile subscriber identity (temporary mobile subscriber identity, TMSI) (namely, an SAE TMSI, an S-TMSI for short), or the identification information of the terminal device may be, for example, an identifier of an address of a channel allocated by the access network device to the terminal device.

In another optional manner, the SF network element sends the second information and the identification information of the terminal device to the AMF network element, where the identification information of the terminal device sent by the SF network element to the AMF network element may be, for example, a subscription permanent identifier (subscription permanent identifier, SUPI). Then, the AMF network element sends the second information and the identification information of the terminal to the access network device corresponding to the terminal device. The identification information of the terminal device sent by the AMF network element to the access network device may be, for example, a RAN UE NGAP ID or an AMF UE NGAP ID. An NGAP is a next generation application protocol (next generation application protocol). In an optional implementation, the method further includes: The sensing device sends third information to the SF network element, where the third information indicates whether the transmission resource allocated to the sensing service is successfully adjusted. Correspondingly, the SF network element receives the third information from the sensing device.

In an optional implementation, the method further includes: The SF network element sends, to the AF network element, sensing data obtained by using the adjusted transmission resource. The AF network element determines, based on the sensing data obtained by using the adjusted transmission resource, that the sensing result is accurate or the requirement for the sensing service is met, and sends fourth information or the fifth information to the SF network element, where the fourth information indicates that the requirement for the sensing service is met, and the fifth information is used to request to reduce the transmission resource allocated to the sensing service. This manner may be applied to the scenario in which the AF network element sends the first information to the SF network element.

For example, this manner may be applied to the scenario (for example, Implementation 2.1) in which the AF network element sends the first information to the SF network element. In this scenario, after a period of time from the operation of sending the first information by the AF network element to the SF network element, the AF network element receives the sensing data obtained by using the adjusted transmission resource, and the AF network element compares the sensing data with the information obtained in the another manner, or compares the sensing data with the historical information, or compares the sensing data with the information obtained through the user feedback, and finds that the sensing result is accurate.

Alternatively, in another possible implementation, the AF network element may periodically collect statistics on whether the sensing result determined based on the received sensing data is accurate. When determining that the sensing result is accurate, the AF network element may send the fourth information or the fifth information to the SF network element. That the AF network element determines whether the sensing result determined based on the received sensing data is accurate may be, for example, that the sensing result is compared with the information obtained in the another manner, or compared with the historical information, or compared with the information obtained through the user feedback, to determine whether the sensing result is accurate.

In an optional manner, the method further includes: The SF network element sends sixth information to the sensing device, where the sixth information is used to request to reduce the transmission resource allocated to the sensing service. This helps avoid resource waste caused by allocation of the excessive transmission resources to the sensing service. In a scenario in which the SF network element receives the fifth information, the sixth information may be the same as the fifth information, or may be information generated based on the fifth information.

In another optional manner, in a scenario in which the SF network element receives the fourth information, alternatively, the SF network element may not send the sixth information to the sensing device. This implementation may be applied to a scenario in which the sensing device increases, in step S103 based on a step size, the transmission resource allocated to the sensing service. The step size may be predetermined or configured. This is not limited. This implementation may be further applied to a scenario in which the network is configured with a rule that the network does not further interact with the sensing device when the requirement for the sensing service is met.

In addition, optionally, the SF network element may further determine, in combination with other information, that the requirement for the sensing service is met. For example, if the SF network element does not receive, in a predefined (or network-configured or network-managed) time window, information that is from the AF network element and that indicates that the requirement for the sensing service is not met, the SF network element may determine that the requirement for the sensing service is met.

In another optional implementation, the method further includes: The SF network element determines, based on sensing data obtained by using the adjusted transmission resource, that the requirement for the sensing service is met. This implementation may be applied to the case in which the SF network element has the capability of determining the sensing result based on the sensing data. In this case, the SF network element can determine the sensing result based on the sensing data, so that the SF network element can determine, based on the sensing result, that the requirement for the sensing service is met.

For example, this implementation may be applied to a scenario (for example, Implementation 2.2) in which the SF network element determines the first information based on the sensing data corresponding to the sensing service. In this scenario, after a period of time from the operation of sending the second information to the sensing device by the SF network element, the SF network element receives the sensing data obtained by using the adjusted transmission resource, and the SF network element compares the sensing data with the information obtained in the another manner, or compares the sensing data with the historical information, or compares the sensing data with the information obtained through the user feedback, and finds that the sensing result is accurate.

Alternatively, in another possible implementation, the SF network element may periodically collect statistics on whether the sensing result determined based on the received sensing data is accurate. That the SF network element determines whether the sensing result determined based on the received sensing data is accurate may be, for example, that the sensing result is compared with the information obtained in the another manner, or compared with the historical information, or compared with the information obtained through the user feedback, to determine whether the sensing result is accurate.

In an optional manner, the method further includes: The SF network element sends sixth information to the sensing device, where the sixth information is used to request to reduce the transmission resource allocated to the sensing service. This helps avoid resource waste caused by allocation of the excessive transmission resources to the sensing service.

In another optional manner, alternatively, the SF network element may not send the sixth information to the sensing device. This implementation may be applied to a scenario in which the sensing device increases, in step S103 based on a step size, the transmission resource allocated to the sensing service. The step size may be predetermined or configured. This is not limited. This implementation may be further applied to a scenario in which the network is configured with a rule that the network does not further interact with the sensing device when the requirement for the sensing service is met.

In addition, optionally, the SF network element may further determine, in combination with other information, that the requirement for the sensing service is met. For example, if the SF network element does not identify, in a predefined (or network-configured or network-managed) time window, any information indicating that the requirement for the sensing service is not met, the SF network element may determine that the requirement for the sensing service is met.

In conclusion, in the information transmission method 100, the SF network element determines, based on the first information and the requirement for the sensing service, that the transmission resource allocated to the sensing service needs to be adjusted, where the first information includes the one or more of the following: the error event information, the error event proportion, or the performance parameter that does not meet the requirement, and the first information is determined based on the sensing data corresponding to the sensing service. The SF network element sends the second information to the sensing device, where the second information is used to adjust the transmission resource allocated to the sensing service.

It can be learned that, in this manner, after the sensing data is obtained, that the transmission resource allocated to the sensing service needs to be adjusted can be determined based on the requirement for the sensing service and the first information determined based on the sensing data, and the second information is sent to the sensing device. This helps the sensing device adjust the transmission resource allocated to the sensing service. In this way, the sensing device performs sensing based on the adjusted transmission resource, to help meet the requirement for the sensing service, thereby improving sensing performance.

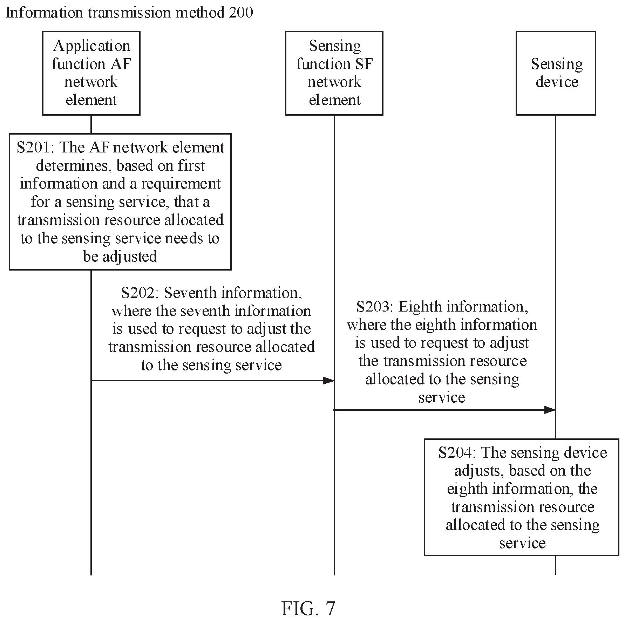

FIG. 7 is a diagram of an information transmission method 200 according to an embodiment of this application. The information transmission method 200 includes the following steps.

S201: The AF network element determines, based on first information and a requirement for a sensing service, that a transmission resource allocated to the sensing service needs to be adjusted.

The first information includes one or more of the following: error event information, an error event proportion, or a performance parameter that does not meet the requirement, and the first information is determined based on sensing data corresponding to the sensing service. For specific descriptions of the first information, refer to related descriptions in the information transmission method 100. Details are not described again.

In addition, that the AF network element determines, based on the first information and the requirement for the sensing service, that the transmission resource allocated to the sensing service needs to be adjusted is similar to that the SF network element determines, based on the first information and the requirement for the sensing service, that the transmission resource allocated to the sensing service needs to be adjusted in the information transmission method 100. For details, refer to specific descriptions in the information transmission method 100. Details are not described again.

In an optional manner, the AF network element may determine, based on the first information and the requirement for the sensing service, whether the transmission resource allocated to the sensing service needs to be adjusted. If the transmission resource allocated to the sensing service needs to be adjusted, step S202 is performed.

S202: The AF network element sends seventh information to the SF network element, where the seventh information is used to request to adjust the transmission resource allocated to the sensing service. Correspondingly, the SF network element receives the seventh information from the AF network element.

In an optional implementation, the seventh information is specifically used to request to adjust, for a first performance parameter, the transmission resource allocated to the sensing service, where the first performance parameter is a performance parameter that does not meet the requirement. This is similar to the implementation in which the second information is specifically used to request to adjust, for the first performance parameter, the transmission resource allocated to the sensing service in the information transmission method 100. For details, refer to related descriptions of the implementation. Details are not described again.

In an optional implementation, the seventh information includes one or more of the following: the performance parameter that does not meet the requirement, or a gap between the performance parameter that does not meet the requirement and the requirement. For specific descriptions of the performance parameter that does not meet the requirement and the gap between the performance parameter that does not meet the requirement and the requirement, refer to related descriptions in the information transmission method 100. Details are not described again.

In an optional implementation, the seventh information is specifically used to request to increase the transmission resource allocated to the sensing service.

S203: The SF network element sends eighth information to the sensing device, where the eighth information is used to request to adjust the transmission resource allocated to the sensing service. Correspondingly, the sensing device receives the eighth information from the SF network element.

The eighth information may be the same as the seventh information, or the eighth information may be information determined (/generated) based on the seventh information.

S204: The sensing device adjusts, based on the eighth information, the transmission resource allocated to the sensing service. This is similar to that the sensing device adjusts, based on the second information, the transmission resource allocated to the sensing service in the information transmission method 100. For specific descriptions, refer to related descriptions in the information transmission method 100. Details are not described again.

It can be learned that a difference between the information transmission method 200 and the information transmission method 100 lies in that, in the information transmission method 200, the AF network element determines, based on the first information and the requirement for the sensing service, that the transmission resource allocated to the sensing service needs to be adjusted, and sends the seventh information to the SF network element, to request to adjust the transmission resource allocated to the sensing service.

In addition, the information transmission method 200 is similar to the information transmission method 100. For specific descriptions, refer to related descriptions of the information transmission method 100. The information transmission method 200 may further include the implementation in the information transmission method 100. For specific descriptions, refer to related descriptions in the information transmission method 100. Details are not described again.

In conclusion, in the information transmission method 200, after the sensing data is obtained, that the transmission resource allocated to the sensing service needs to be adjusted can be determined based on the requirement for the sensing service and the first information determined based on the sensing data, and the seventh information is sent to the SF network element. This helps adjust the transmission resource allocated to the sensing service. In this way, sensing is performed based on an adjusted transmission resource, to help meet the requirement for the sensing service, thereby improving sensing performance.

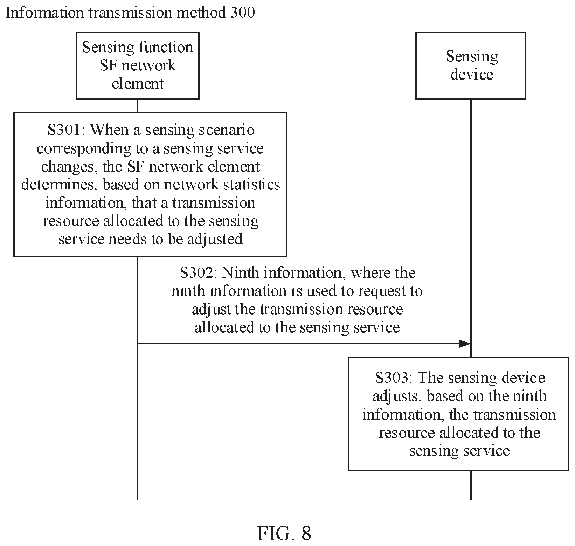

An embodiment of this application further provides an information transmission method 300. A difference between the information transmission method 300 and the information transmission method 100 lies in that, in the information transmission method 300, when a sensing scenario corresponding to a sensing service changes, the SF network element or the AF network element determines, based on network statistics information, that a transmission resource allocated to the sensing service needs to be adjusted. For example, with reference to FIG. 8, the information transmission method 300 includes steps S301 to S303.

S301: When the sensing scenario corresponding to the sensing service changes, the SF network element determines, based on the network statistics information, that the transmission resource allocated to the sensing service needs to be adjusted. The network statistics information includes N sensing scenarios and transmission resources respectively corresponding to the N sensing scenarios, and N is an integer greater than 1.

The sensing scenario may be, for example, a scenario of an influencing factor like weather, an environment, or time, that is, that the sensing scenario changes may be that the weather, the environment, or the time changes. In addition, the sensing scenario may also be understood as an external condition.

The network statistics information may be, for example, information (for example, an empirical value) obtained based on experience. A network may determine a correspondence between a sensing scenario and a transmission resource in a deployment and debugging phase. When the sensing scenario corresponding to the sensing service changes, the SF network element may determine, based on the network statistics information, that the transmission resource allocated to the sensing service needs to be adjusted. In this case, the SF network element may not need to identify each error event.

In an optional implementation, the method may further include: The SF network element determines (or finds) that the sensing scenario corresponding to the sensing service changes. Alternatively, the method may further include: The SF network element obtains information indicating that the sensing scenario changes. In this way, the SF network element can learn that the sensing scenario corresponding to the sensing service changes. A manner in which the SF network element learns that the sensing scenario changes is not limited in embodiments of this application.

In an optional implementation, that the sensing scenario corresponding to the sensing service changes includes: The sensing scenario corresponding to the sensing service changes from a first sensing scenario to a second sensing scenario. That the SF network element determines, based on the network statistics information, that the transmission resource allocated to the sensing service needs to be adjusted includes: The SF network element determines whether a transmission resource corresponding to the first sensing scenario is the same as a transmission resource corresponding to the second sensing scenario; and if the transmission resources are different, the SF network element determines that the transmission resource allocated to the sensing service needs to be adjusted.

For example, the sensing scenario corresponding to the sensing service changes from a sunny scenario to a rainy scenario, and the rainy scenario corresponds to more transmission resources than the sunny scenario. In this case, the SF network element may determine that the transmission resource allocated to the sensing service needs to be increased.

For another example, the sensing scenario corresponding to the sensing service changes from a road non-congestion scenario to a road congestion scenario, and the road congestion scenario corresponds to more transmission resources than the road non-congestion scenario. In this case, the SF network element may determine that the transmission resource allocated to the sensing service needs to be increased.

For another example, the sensing scenario corresponding to the sensing service changes from a midday scenario to an evening peak scenario, and the evening peak scenario corresponds to more transmission resources than the midday scenario. In this case, the SF network element may determine that the transmission resource allocated to the sensing service needs to be increased.

In an optional implementation, sensing is performed based on the transmission resource corresponding to the sensing scenario in the network statistics information. This can meet a requirement for the sensing service in the sensing scenario. For example, when the sensing scenario corresponding to the sensing service is a sensing scenario #1, a transmission resource corresponding to the sensing scenario #1 is allocated to the sensing service, so that sensing is performed based on the transmission resource corresponding to the sensing scenario #1. This can meet the requirement for the sensing service. When the sensing scenario corresponding to the sensing service is a sensing scenario #2, a transmission resource corresponding to the sensing scenario #2 is allocated to the sensing service, so that sensing is performed based on the transmission resource corresponding to the sensing scenario #2. This can meet the requirement for the sensing service.

In an optional implementation, the N sensing scenarios in the network statistics information correspond to the sensing service. For example, the network statistics information may include N sensing scenarios corresponding to each of one or more sensing services and a transmission resource corresponding to each sensing scenario, where sensing scenarios corresponding to different sensing services may be partially or fully the same or fully different, and quantities of the sensing scenarios corresponding to the different sensing services may be the same or different. This is not limited. In this case, the SF network element may determine, from the one or more sensing services, the sensing service whose sensing scenario changes, to determine, based on transmission resources respectively corresponding to N sensing scenarios corresponding to the sensing service, whether the transmission resource allocated to the sensing service needs to be adjusted.

For example, the network statistics information is shown in Table 2.

**Table 2**

| Sensing service | Sensing scenario | Transmission resource |
|---|---|---|
| Sensing service #1 | Sensing scenario #1 | Transmission resource #1 |
| | Sensing scenario #2 | Transmission resource #2 |
| | Sensing scenario #3 | Transmission resource #3 |
| Sensing service #2 | Sensing scenario #4 | Transmission resource #4 |
| | Sensing scenario #5 | Transmission resource #5 |

Based on Table 2, for example, in the sensing scenario #1, a transmission resource allocated to the sensing service #1 is the transmission resource #1. Then, the SF network element detects that a sensing scenario corresponding to the sensing service #1 changes from the sensing scenario #1 to the sensing scenario #2, and the SF network element may determine, from the network statistics information, that, for the sensing service #1, a transmission resource corresponding to the sensing scenario #2 is the transmission resource #2. If the transmission resource #2 is more than the transmission resource #1, the SF network element determines that the transmission resource allocated to the sensing service #1 needs to be increased. If the transmission resource #2 is less than the transmission resource #1, the SF network element determines that the transmission resource allocated to the sensing service #1 needs to be reduced. If the transmission resource #2 is the same as the transmission resource #1, the SF network element determines that the transmission resource allocated to the sensing service #1 does not need to be adjusted.

In an optional implementation, the network statistics information further includes sensing requirements respectively corresponding to the N sensing scenarios. Sensing is performed based on the transmission resource corresponding to the sensing scenario in the network statistics information, so that a sensing requirement corresponding to the sensing scenario can be met. For example, a requirement for the sensing service #1 is a first requirement. In this case, the SF network element may determine, based on the network statistics information, a sensing scenario corresponding to the first requirement, and determine, based on a transmission resource corresponding to the sensing scenario corresponding to the first requirement, whether the transmission resource allocated to the sensing service #1 needs to be adjusted, to meet the requirement for the sensing service #1.

For example, the network statistics information is shown in Table 3.

**Table 3**

| Sensing service | Sensing requirement | Sensing scenario | Transmission resource |
|---|---|---|---|
| Sensing service #1 | Requirement #1 | Sensing scenario #1 | Transmission resource #1 |
| | Requirement #1 | Sensing scenario #2 | Transmission resource #2 |
| | Requirement #2 | Sensing scenario #1 | Transmission resource #3 |
| | Requirement #2 | Sensing scenario #2 | Transmission resource #4 |
| Sensing service #2 | Requirement #3 | Sensing scenario #1 | Transmission resource #5 |
| | Requirement #3 | Sensing scenario #2 | Transmission resource #6 |

Based on Table 3, for example, the requirement for the sensing service is the requirement #2. In a case of the requirement #2, in the sensing scenario #1, a transmission resource allocated to the sensing service #1 is the transmission resource #3. Then, the SF network element detects that a sensing scenario corresponding to the sensing service #1 changes from the sensing scenario #1 to the sensing scenario #2, and the SF network element may determine, from the network statistics information, that, for the sensing service #1 in the case of the requirement #2, a transmission resource corresponding to the sensing scenario #2 is the transmission resource #4. If the transmission resource #4 is more than the transmission resource #3, the SF network element determines that the transmission resource allocated to the sensing service #1 needs to be increased. If the transmission resource #4 is less than the transmission resource #3, the SF network element determines that the transmission resource allocated to the sensing service #1 needs to be reduced. If the transmission resource #4 is the same as the transmission resource #3, the SF network element determines that the transmission resource allocated to the sensing service #1 does not need to be adjusted.

In an optional implementation, when the sensing scenario corresponding to the sensing service changes, the SF network element may determine whether the transmission resource allocated to the sensing service needs to be adjusted. If the transmission resource allocated to the sensing service needs to be adjusted, step S302 is performed.

S302: The SF network element sends ninth information to the sensing device, where the ninth information is used to request to adjust the transmission resource allocated to the sensing service.

Optionally, the ninth information includes a policy used to adjust the transmission resource allocated to the sensing service. For example, based on Table 2, the SF network element detects that a sensing scenario corresponding to the sensing service #1 changes from the sensing scenario #1 to the sensing scenario #2, and the transmission resource #2 is more than the transmission resource #1. The ninth information may include a quantity of transmission resources that need to be increased for a transmission resource allocated to the sensing service #1. The quantity of transmission resources that need to be increased is a difference in a quantity of transmission resources between the transmission resource #2 and the transmission resource #1.

S303: The sensing device adjusts, based on the ninth information, the transmission resource allocated to the sensing service.

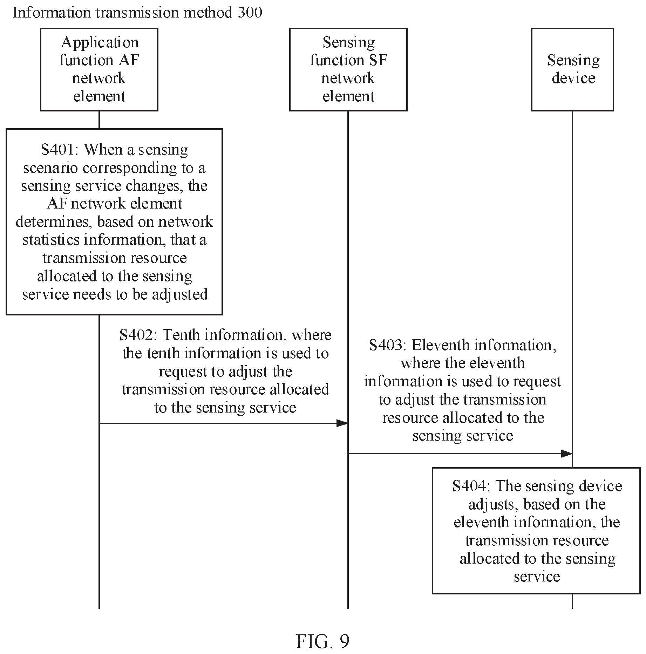

In another optional implementation, in the information transmission method 300, the AF network element determines, based on the network statistics information, that the transmission resource allocated to the sensing service needs to be adjusted. For example, an information transmission method 300 shown in FIG. 9 includes step S401 to step S404. The information transmission method 300 shown in FIG. 9 is similar to the information transmission method 300 shown in FIG. 8. For specific descriptions, refer to related descriptions of the information transmission method 300 shown in FIG. 8. Details are not described again.

S401: When the sensing scenario corresponding to the sensing service changes, the AF network element determines, based on the network statistics information, that the transmission resource allocated to the sensing service needs to be adjusted. The network statistics information includes N sensing scenarios and transmission resources respectively corresponding to the N sensing scenarios, and N is an integer greater than 1.

In an optional manner, when the sensing scenario corresponding to the sensing service changes, the AF network element may determine whether the transmission resource allocated to the sensing service needs to be adjusted. If the transmission resource allocated to the sensing service needs to be adjusted, step S402 is performed.

S402: The AF network element sends tenth information to the SF network element, where the tenth information is used to request to adjust the transmission resource allocated to the sensing service. Correspondingly, the SF network element receives the tenth information from the AF network element.

S403: The SF network element sends eleventh information to the sensing device, where the eleventh information is used to request to adjust the transmission resource allocated to the sensing service. Correspondingly, the sensing device receives the eleventh information from the SF network element. The eleventh information may be the same as the tenth information, or the eleventh information may be information generated by the SF network element based on the tenth information.

S404: The sensing device adjusts, based on the eleventh information, the transmission resource allocated to the sensing service.

In conclusion, in the information transmission method 300, in a scenario in which the sensing scenario corresponding to the sensing service changes, that the transmission resource allocated to the sensing service needs to be adjusted can be determined based on the network statistics information, and the information used to request to adjust the transmission resource allocated to the sensing service is sent. This helps adjust the transmission resource allocated to the sensing service. Accordingly, this helps an adjusted transmission resource match a changed sensing scenario, to help meet a requirement for the sensing service, thereby improving sensing performance.

The following describes, by using examples, the information transmission methods provided in embodiments of this application, for example, information transmission methods described in the following Example 1 to Example 3.

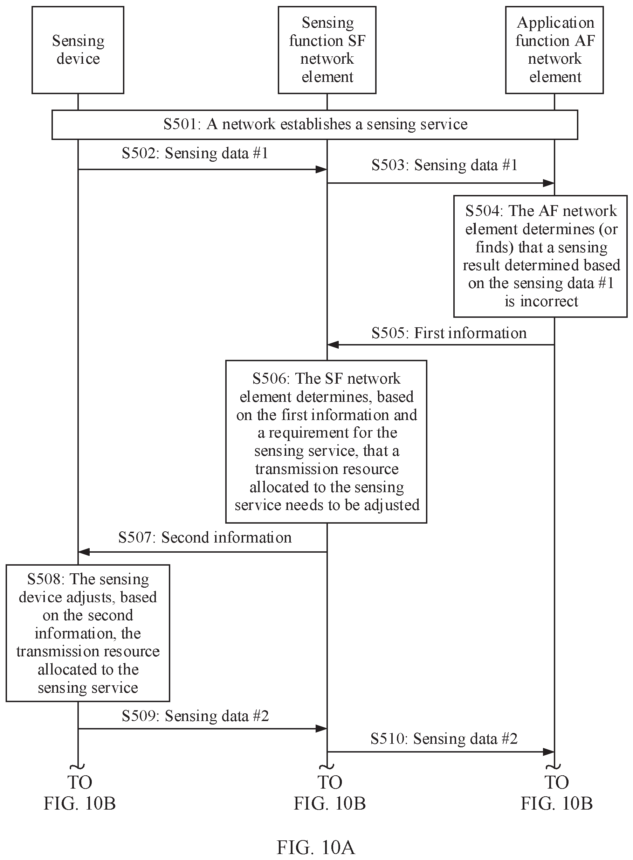

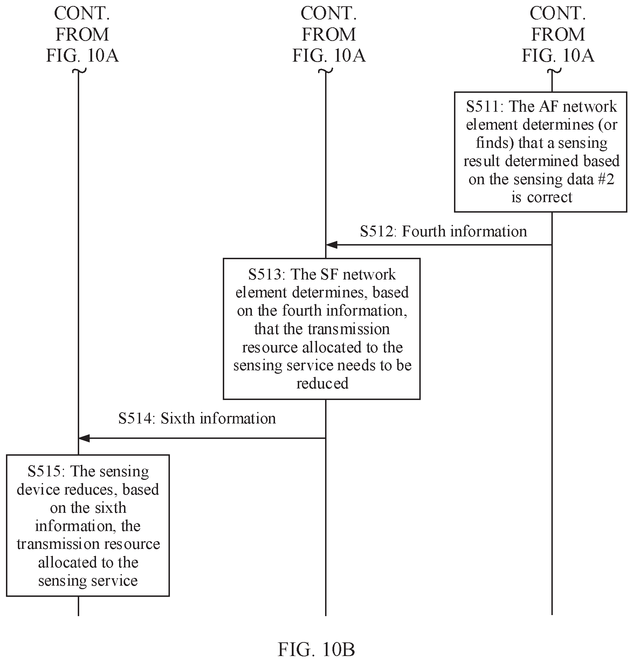

Example 1: With reference to FIG. 10A and FIG. 10B, an information transmission method in Example 1 includes the following steps.

S501: A network establishes a sensing service.

S502: The sensing device sends sensing data #1 to the SF network element. Correspondingly, the SF network element receives the sensing data #1 from the sensing device.

S503: The SF network element sends the sensing data #1 to the AF network element. Correspondingly, the AF network element receives the sensing data #1 from the SF network element.

S504: The AF network element determines (or finds) that a sensing result determined based on the sensing data #1 is incorrect.

S505: The AF network element sends first information to the SF network element. Correspondingly, the SF network element receives the first information from the AF network element.

The first information includes one or more of the following: error event information, an error event proportion, or a performance parameter that does not meet a requirement, and the first information is determined based on the sensing data #1 corresponding to the sensing service.

S506: The SF network element determines, based on the first information and the requirement for the sensing service, that a transmission resource allocated to the sensing service needs to be adjusted.

S507: The SF network element sends second information to the sensing device. Correspondingly, the sensing device receives the second information from the SF network element.

The second information is used to adjust the transmission resource allocated to the sensing service. Optionally, the second information includes one or more of the following: the performance parameter that does not meet the requirement, or a gap between the performance parameter that does not meet the requirement and the requirement. Optionally, the second information is specifically used to request to increase the transmission resource allocated to the sensing service. Alternatively, the second information is specifically used to request to increase, for a first performance parameter, the transmission resource allocated to the sensing service, where the first performance parameter is a performance parameter that does not meet the requirement.

S508: The sensing device adjusts, based on the second information, the transmission resource allocated to the sensing service.

For example, in step S508, adjusting the transmission resource allocated to the sensing service is specifically increasing the resource allocated to the sensing service.

S509: The sensing device sends sensing data #2 to the SF network element. Correspondingly, the SF network element receives the sensing data #2 from the sensing device. The sensing data #2 is obtained by the sensing device by performing sensing based on an adjusted transmission resource.

S510: The SF network element sends the sensing data #2 to the AF network element. Correspondingly, the AF network element receives the sensing data #2 from the SF network element.

S511: The AF network element determines (or finds) that a sensing result determined based on the sensing data #2 is correct. It may be understood that the AF network element determines, based on the sensing data #2, that the requirement for the sensing service is met.

S512: The AF network element sends fourth information to the SF network element. Correspondingly, the SF network element receives the fourth information from the AF network element. The fourth information indicates that the requirement for the sensing service is met.

S513: The SF network element determines, based on the fourth information, that the transmission resource allocated to the sensing service needs to be reduced.

In addition, the SF network element may further determine, based on the fourth information, that an acknowledgment message needs to be sent to the sensing device. The acknowledgment message may include identification information of the sensing service and indication information indicating that the requirement for the sensing service is met.

S514: The SF network element further sends sixth information to the sensing device, where the sixth information is used to request to reduce the transmission resource allocated to the sensing service. Correspondingly, the sensing device receives the sixth information from the SF network element.

S515: The sensing device reduces, based on the sixth information, the transmission resource allocated to the sensing service.

For specific descriptions of the information transmission method in Example 1, refer to related descriptions of the information transmission method 100. Details are not described again.

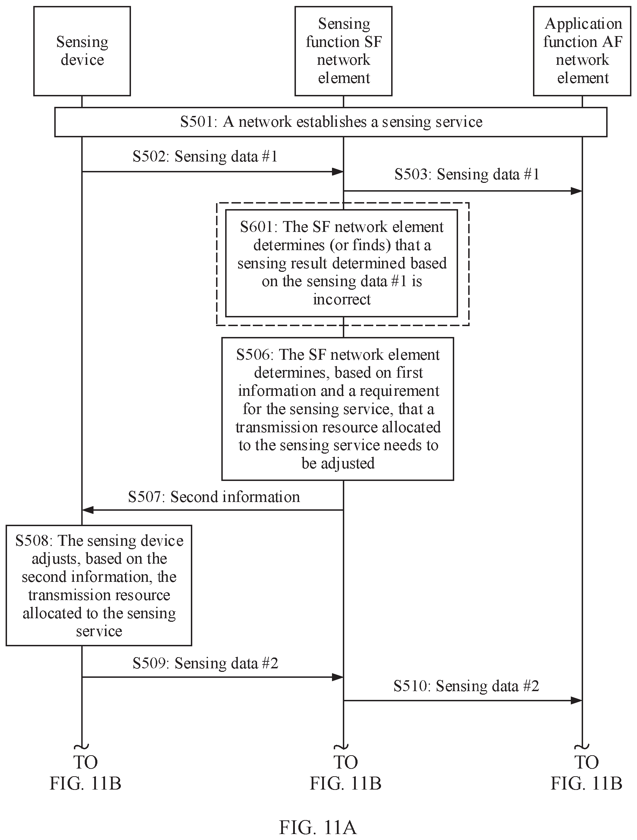

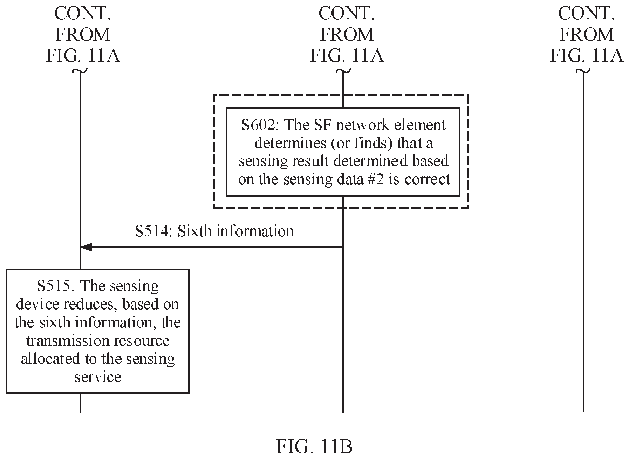

Example 2: With reference to FIG. 11A and FIG. 11B, as shown in dashed-line boxes in FIG. 11A and FIG. 11B, a difference between an information transmission method in Example 2 and the information transmission method in Example 1 lies in that step S504 and step S505 in the information transmission method in Example 1 are replaced with step S601, and step S511 to step S513 are replaced with step S602, to obtain the information transmission method in Example 2.

S601: The SF network element determines (or finds) that a sensing result determined based on sensing data #1 is incorrect.

S602: The SF network element determines (or finds) that a sensing result determined based on sensing data #2 is correct.

For specific descriptions of the information transmission method in Example 2, refer to related descriptions of the information transmission method 100. Details are not described again.

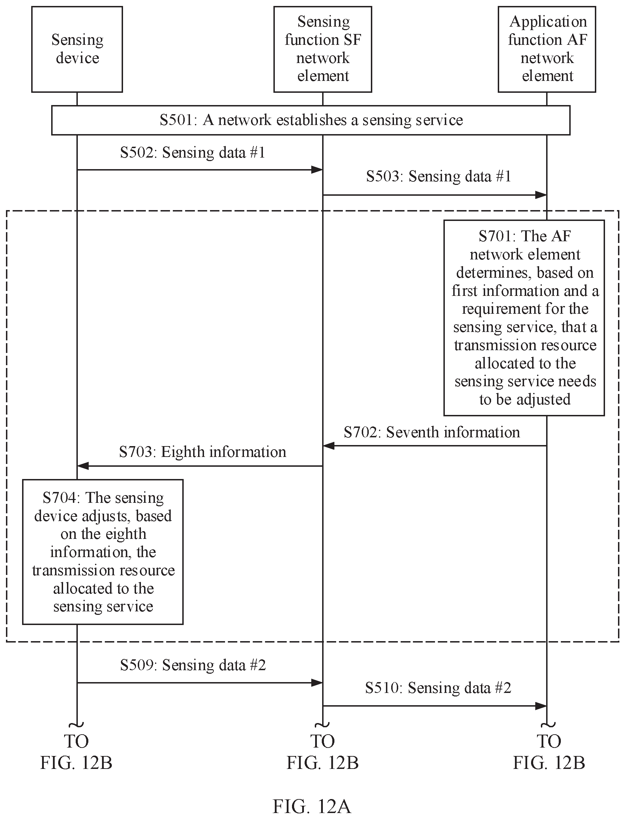

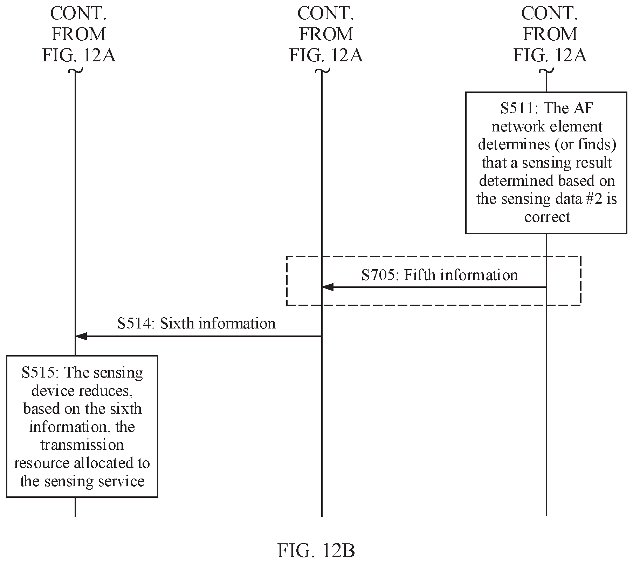

Example 3: With reference to FIG. 12A and FIG. 12B, as shown in dashed-line boxes in FIG. 12A and FIG. 12B, a difference between an information transmission method in Example 3 and the information transmission method in Example 1 lies in that step S504 to step S508 in the information transmission method in Example 1 are replaced with step S701 to step S704, and step S512 and step S513 are replaced with step S705, to obtain the information transmission method in Example 3.

S701: The AF network element determines, based on first information and a requirement for a sensing service, that a transmission resource allocated to the sensing service needs to be adjusted.

The first information includes one or more of the following: error event information, an error event proportion, or a performance parameter that does not meet the requirement, and the first information is determined based on sensing data #1 corresponding to the sensing service.

For example, in step S701, adjusting the transmission resource allocated to the sensing service is specifically increasing the resource allocated to the sensing service.

S702: The AF network element sends seventh information to the SF network element, where the seventh information is used to request to adjust the transmission resource allocated to the sensing service. Correspondingly, the SF network element receives the seventh information from the AF network element.

S703: The SF network element sends eighth information to the sensing device, where the eighth information is used to request to adjust the transmission resource allocated to the sensing service. Correspondingly, the sensing device receives the eighth information from the SF network element.

The eighth information may be the same as the seventh information, or the eighth information may be information determined (/generated) based on the seventh information.

S704: The sensing device adjusts, based on the eighth information, the transmission resource allocated to the sensing service.

S705: The AF network element sends fifth information to the SF network element, where the fifth information is used to request to reduce the transmission resource allocated to the sensing service. Correspondingly, the SF network element receives the fifth information from the AF network element.

For specific descriptions of the information transmission method in Example 3, refer to related descriptions of the information transmission method 200. Details are not described again.

To implement functions in the foregoing methods provided in embodiments of this application, the network element/device may include a hardware structure and/or a software module, to implement the foregoing functions in a form of the hardware structure, the software module, or a combination of the hardware structure and the software module. Whether a function in the foregoing functions is performed in the form of the hardware structure, the software module, or the combination of the hardware structure and the software module depends on particular applications and design constraints of the technical solutions.

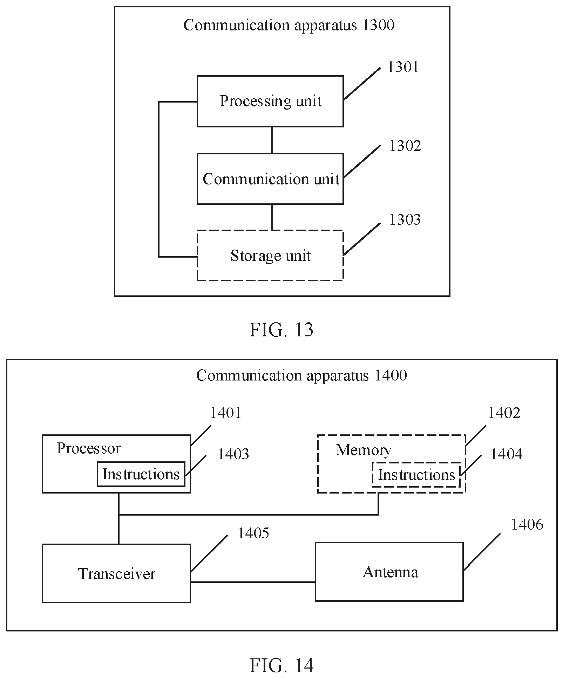

As shown in FIG. 13, an embodiment of this application provides a communication apparatus 1300. The communication apparatus 1300 may be an SF network element or an SMF network element, or may be a component (for example, an integrated circuit or a chip) of the SF network element, or may be a component (for example, an integrated circuit or a chip) of the SMF network element. The communication apparatus 1300 may alternatively be another communication unit, configured to implement the methods in the method embodiments of this application. The communication apparatus 1300 may include a processing unit 1301. Optionally, the communication apparatus 1300 may further include a communication unit 1302. The processing unit 1301 is configured to control the communication unit 1302 to perform data/signaling receiving and sending. The communication unit 1302 may also be referred to as a transceiver unit. Optionally, the communication unit 1302 may include a sending unit and a receiving unit. The sending unit may be configured to send data/signaling, and the receiving unit may be configured to receive data/signaling. Optionally, the communication apparatus 1300 may further include a storage unit 1303. The storage unit 1303 may be configured to store information and/or data and/or instructions, and/or the like. The storage unit 1303 may interact with the processing unit 1301, or may interact with the communication unit 1302.

In a possible design, for a case in which the communication apparatus 1300 is configured to implement functions of the SF network element in the foregoing method embodiment,
the processing unit 1301 is configured to determine, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service; and
the communication unit 1302 is configured to send second information to a sensing device, where the second information is used to adjust the transmission resource allocated to the sensing service.

In an optional implementation, the communication unit 1302 is further configured to receive first information from an AF network element.

In an optional implementation, the second information includes one or more of the following: the performance parameter that does not meet the requirement, or a gap between the performance parameter that does not meet the requirement and the requirement.

In an optional implementation, the second information is specifically used to request to adjust the transmission resource allocated to the sensing service. Alternatively, the second information is specifically used to request to adjust, for a first performance parameter, the transmission resource allocated to the sensing service, where the first performance parameter is a performance parameter that does not meet the requirement.

In an optional implementation, the second information is specifically used to increase the transmission resource allocated to the sensing service.

In an optional implementation, the sensing device is a terminal device. The communication unit 1302 is further configured to send the second information to an access network device corresponding to the terminal device.

In an optional implementation, the communication unit 1302 is further configured to receive third information from the sensing device, where the third information indicates whether the transmission resource allocated to the sensing service is successfully adjusted.

In an optional implementation, the communication unit 1302 is further configured to send, to the AF network element, sensing data obtained by using an adjusted transmission resource. The communication unit 1302 is further configured to receive fourth information or fifth information from the AF network element, where the fourth information indicates that the requirement for the sensing service is met, and the fifth information is used to request to reduce the transmission resource allocated to the sensing service. The communication unit 1302 is further configured to send sixth information to the sensing device, where the sixth information is used to request to reduce the transmission resource allocated to the sensing service.

In an optional implementation, the processing unit 1301 is further configured to determine, based on sensing data obtained by using an adjusted transmission resource, that the requirement for the sensing service is met. The communication unit 1302 is further configured to send sixth information to the sensing device, where the sixth information is used to request to reduce the transmission resource allocated to the sensing service.

In another possible design, for a case in which the communication apparatus 1300 is configured to implement functions of the SF network element in the foregoing method embodiment,
the processing unit 1301 is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1; and
the communication unit 1302 is configured to send ninth information to a sensing device, where the ninth information is used to request to adjust the transmission resource allocated to the sensing service.

In another possible design, for a case in which the communication apparatus 1300 is configured to implement functions of the AF network element in the foregoing method embodiment,
the processing unit 1301 is configured to determine, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service; and
the communication unit 1302 is configured to send seventh information to an SF network element, where the seventh information is used to request to adjust the transmission resource allocated to the sensing service.

In an optional implementation, the seventh information is specifically used to request to adjust, for a first performance parameter, the transmission resource allocated to the sensing service, where the first performance parameter is a performance parameter that does not meet the requirement.

In an optional implementation, the seventh information includes one or more of the following: the performance parameter that does not meet the requirement, or a gap between the performance parameter that does not meet the requirement and the requirement.

In an optional implementation, the seventh information is specifically used to request to increase the transmission resource allocated to the sensing service.

In an optional implementation, the communication unit 1302 is further configured to receive, from the SF network element, sensing data obtained by using an adjusted transmission resource. The processing unit 1301 is further configured to determine, based on the sensing data obtained by using the adjusted transmission resource, that the requirement for the sensing service is met. The communication unit 1302 is further configured to send fourth information or fifth information to the SF network element, where the fourth information indicates that the requirement for the sensing service is met, and the fifth information is used to request to reduce the transmission resource allocated to the sensing service.

In another possible design, for a case in which the communication apparatus 1300 is configured to implement functions of the AF network element in the foregoing method embodiment,
the processing unit 1301 is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1; and
the communication unit 1302 is configured to send tenth information to an SF network element, where the tenth information is used to request to adjust the transmission resource allocated to the sensing service.

This embodiment of this application and the foregoing method embodiments are based on a same concept, and bring same technical effect. For a specific principle, refer to descriptions in the foregoing embodiments. Details are not described again.

An embodiment of this application further provides a communication apparatus 1400, as shown in FIG. 14. The communication apparatus 1400 may be an SF network element or an AF network element, or may be a chip, a chip system, a processor, or the like that supports the SF network element or the AF network element in implementing the foregoing methods. The apparatus may be configured to implement the methods described in the foregoing method embodiments. For details, refer to descriptions in the foregoing method embodiments.

The communication apparatus 1400 may include one or more processors 1401. The processor 1401 may be configured to implement a part or all of functions of the foregoing SF network element or SMF network element through a logic circuit or by running a computer program. The processor 1401 may be a general-purpose processor, a dedicated processor, or the like. For example, the processor 1401 may be a baseband processor, a digital signal processor, an application-specific integrated circuit, a field programmable gate array or another programmable logic device, a discrete gate or a transistor logic device, or a discrete hardware component or a CPU. The baseband processor may be configured to process a communication protocol and communication data. A central processing unit may be configured to: control the communication apparatus, execute a software program, and process data of the software program. The communication apparatus is, for example, a base station, a baseband chip, a terminal, a terminal chip, a distributed unit (distributed unit, DU), or a central unit (central unit, CU).

Optionally, the communication apparatus 1400 may include one or more memories 1402. The memory may store instructions 1404. The instructions may be run on the processor 1401, to enable the communication apparatus 1400 to perform the methods described in the foregoing method embodiments. Optionally, the memory 1402 may further store data. The processor 1401 and the memory 1402 may be separately disposed, or may be integrated.

The memory 1402 may include but is not limited to a non-volatile memory like a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), and the like.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, for a case in which the communication apparatus 1400 is configured to implement functions of the SF network element in the foregoing method embodiment,
the processor 1401 is configured to determine, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service; and
the transceiver 1405 is configured to send second information to a sensing device, where the second information is used to adjust the transmission resource allocated to the sensing service.

In an optional implementation, the transceiver 1405 is further configured to receive first information from an AF network element.

In an optional implementation, the second information includes one or more of the following: the performance parameter that does not meet the requirement, or a gap between the performance parameter that does not meet the requirement and the requirement.

In an optional implementation, the second information is specifically used to request to adjust the transmission resource allocated to the sensing service. Alternatively, the second information is specifically used to request to adjust, for a first performance parameter, the transmission resource allocated to the sensing service, where the first performance parameter is a performance parameter that does not meet the requirement.

In an optional implementation, the second information is specifically used to increase the transmission resource allocated to the sensing service.

In an optional implementation, the sensing device is a terminal device. The transceiver 1405 is further configured to send the second information to an access network device corresponding to the terminal device.

In an optional implementation, the transceiver 1405 is further configured to receive third information from the sensing device, where the third information indicates whether the transmission resource allocated to the sensing service is successfully adjusted.

In an optional implementation, the transceiver 1405 is further configured to send, to the AF network element, sensing data obtained by using an adjusted transmission resource. The transceiver 1405 is further configured to receive fourth information or fifth information from the AF network element, where the fourth information indicates that the requirement for the sensing service is met, and the fifth information is used to request to reduce the transmission resource allocated to the sensing service. The transceiver 1405 is further configured to send sixth information to the sensing device, where the sixth information is used to request to reduce the transmission resource allocated to the sensing service.

In an optional implementation, the processor 1401 is further configured to determine, based on sensing data obtained by using an adjusted transmission resource, that the requirement for the sensing service is met. The transceiver 1405 is further configured to send sixth information to the sensing device, where the sixth information is used to request to reduce the transmission resource allocated to the sensing service.

In another possible design, for a case in which the communication apparatus 1400 is configured to implement functions of the SF network element in the foregoing method embodiment,
the processor 1401 is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1; and
the transceiver 1405 is configured to send ninth information to a sensing device, where the ninth information is used to request to adjust the transmission resource allocated to the sensing service.

In another possible design, for a case in which the communication apparatus 1400 is configured to implement functions of the AF network element in the foregoing method embodiment,
the processor 1401 is configured to determine, based on first information and a requirement for a sensing service, that a transmission resource allocated to the sensing service needs to be adjusted, where the first information includes one or more of the following: error event information, an error event proportion, or a performance parameter that does not meet the requirement, and the first information is determined based on sensing data corresponding to the sensing service; and
the transceiver 1405 is configured to send seventh information to an SF network element, where the seventh information is used to request to adjust the transmission resource allocated to the sensing service.

In an optional implementation, the seventh information is specifically used to request to adjust, for a first performance parameter, the transmission resource allocated to the sensing service, where the first performance parameter is a performance parameter that does not meet the requirement.

In an optional implementation, the seventh information includes one or more of the following: the performance parameter that does not meet the requirement, or a gap between the performance parameter that does not meet the requirement and the requirement.

In an optional implementation, the seventh information is specifically used to request to increase the transmission resource allocated to the sensing service.

In an optional implementation, the transceiver 1405 is further configured to receive, from the SF network element, sensing data obtained by using an adjusted transmission resource. The processor 1401 is further configured to determine, based on the sensing data obtained by using the adjusted transmission resource, that the requirement for the sensing service is met. The transceiver 1405 is further configured to send fourth information or fifth information to the SF network element, where the fourth information indicates that the requirement for the sensing service is met, and the fifth information is used to request to reduce the transmission resource allocated to the sensing service.

In another possible design, for a case in which the communication apparatus 1400 is configured to implement functions of the AF network element in the foregoing method embodiment,
the processor 1401 is configured to: when a sensing scenario corresponding to a sensing service changes, determine, based on network statistics information, that a transmission resource allocated to the sensing service needs to be adjusted, where the network statistics information includes N sensing scenarios and transmission resources respectively corresponding to the N sensing scenarios, and N is an integer greater than 1; and
the transceiver 1405 is configured to send tenth information to an SF network element, where the tenth information is used to request to adjust the transmission resource allocated to the sensing service.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to: read and write code/data. Alternatively, the transceiver circuit, the interface, or the interface circuit may be configured to transmit or transfer a signal.

In another possible design, optionally, the processor 1401 may store instructions 1403. The instructions 1403 are run on the processor 1401, to enable the communication apparatus 1400 to perform the methods described in the foregoing method embodiments. The instructions 1403 may be fixed in the processor 1401. In this case, the processor 1401 may be implemented by using hardware.

In another possible design, the communication apparatus 1400 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be produced by using various IC technologies, for example, a complementary metal oxide semiconductor (complementary metal oxide semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic blocks) and steps (steps) that are listed in embodiments of this application may be implemented by electronic hardware, computer software, or a combination thereof. Whether the functions are implemented by hardware or software depends on particular applications and a design requirement of an entire system. A person skilled in the art may use various methods to implement the functions for a particular application, but it should not be considered that the implementation goes beyond the scope of embodiments of this application.

This embodiment of this application and the foregoing method embodiments are based on a same concept, and bring same technical effect. For a specific principle, refer to descriptions in the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a chip. The chip includes a processor. The processor is configured to execute code or instructions, to implement a function in any one of the foregoing method embodiments. Optionally, the chip further includes an interface. The processor is coupled to the interface. The interface is configured to receive or output a signal.

The foregoing embodiments may be all or partially implemented by software, hardware, firmware, or any combination thereof. When being implemented by the software, the foregoing embodiments may be all or partially implemented in a form of a computer program product. The computer program product includes one or more computer instructions. When the computer instruction is loaded and executed on a computer, the procedure or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that is accessed by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An information transmission method, wherein the method comprises:
determining, based on first information and a requirement for a sensing service, that a transmission resource allocated to the sensing service needs to be adjusted, wherein
the first information comprises one or more of the following: error event information, an error event proportion, or a performance parameter that does not meet the requirement, and the first information is determined based on sensing data corresponding to the sensing service; and
sending second information to a sensing device, wherein the second information is used to adjust the transmission resource allocated to the sensing service.

2. The method according to claim 1, wherein the method further comprises:
receiving the first information from an AF network element.

3. The method according to claim 1 or 2, wherein
the second information comprises one or more of the following: the performance parameter that does not meet the requirement, or a gap between the performance parameter that does not meet the requirement and the requirement.

4. The method according to any one of claims 1 to 3, wherein
the second information is specifically used to request to adjust the transmission resource allocated to the sensing service; or
the second information is specifically used to request to adjust, for a first performance parameter, the transmission resource allocated to the sensing service, wherein the first performance parameter is a performance parameter that does not meet the requirement.

5. The method according to any one of claims 1 to 4, wherein
the second information is specifically used to increase the transmission resource allocated to the sensing service.

6. The method according to any one of claims 1 to 5, wherein the sensing device is a terminal device, and the method further comprises:
sending the second information to an access network device corresponding to the terminal device.

7. The method according to any one of claims 1 to 6, wherein the method further comprises:
receiving third information from the sensing device, wherein the third information indicates whether the transmission resource allocated to the sensing service is successfully adjusted.

8. The method according to any one of claims 1 to 7, wherein the method further comprises:
sending, to the AF network element, sensing data obtained by using an adjusted transmission resource;
receiving fourth information or fifth information from the AF network element, wherein the fourth information indicates that the requirement for the sensing service is met, and the fifth information is used to request to reduce the transmission resource allocated to the sensing service; and
sending sixth information to the sensing device, wherein the sixth information is used to request to reduce the transmission resource allocated to the sensing service.

9. The method according to any one of claims 1 to 7, wherein the method further comprises:
determining, based on sensing data obtained by using an adjusted transmission resource, that the requirement for the sensing service is met; and
sending sixth information to the sensing device, wherein the sixth information is used to request to reduce the transmission resource allocated to the sensing service.

10. An information transmission method, wherein the method comprises:
determining, based on first information and a requirement for a sensing service, that a transmission resource allocated to the sensing service needs to be adjusted, wherein
the first information comprises one or more of the following: error event information, an error event proportion, or a performance parameter that does not meet the requirement, and the first information is determined based on sensing data corresponding to the sensing service; and
sending seventh information to a sensing function SF network element, wherein the seventh information is used to request to adjust the transmission resource allocated to the sensing service.

11. The method according to claim 10, wherein
the seventh information is specifically used to request to adjust, for a first performance parameter, the transmission resource allocated to the sensing service, wherein the first performance parameter is a performance parameter that does not meet the requirement.

12. The method according to claim 10 or 11, wherein
the seventh information comprises one or more of the following: the performance parameter that does not meet the requirement, or a gap between the performance parameter that does not meet the requirement and the requirement.

13. The method according to any one of claims 10 to 12, wherein
the seventh information is specifically used to request to increase the transmission resource allocated to the sensing service.

14. The method according to any one of claims 10 to 13, wherein the method further comprises:
receiving, from the SF network element, sensing data obtained by using an adjusted transmission resource;
determining, based on the sensing data obtained by using the adjusted transmission resource, that the requirement for the sensing service is met; and
sending fourth information or fifth information to the SF network element, wherein the fourth information indicates that the requirement for the sensing service is met, and the fifth information is used to request to reduce the transmission resource allocated to the sensing service.

15. A communication apparatus, wherein the apparatus comprises a module or a unit configured to implement the method according to any one of claims 1 to 9, or comprises a module or a unit configured to implement the method according to any one of claims 10 to 14.

16. A communication apparatus, comprising a processor, wherein
the processor is configured to execute a computer program or instructions, to enable the communication apparatus to perform the method according to any one of claims 1 to 9, or perform the method according to any one of claims 10 to 14.

17. A computer-readable storage medium, wherein the computer-readable storage medium stores a computer program, and when the computer program is run, the method according to any one of claims 1 to 9 is implemented, or the method according to any one of claims 10 to 14 is implemented.

18. A computer program product, wherein the computer program product comprises computer program code, and when the computer program code is run, the method according to any one of claims 1 to 9 is implemented, or the method according to any one of claims 10 to 14 is implemented.
